# EUROPÄISCHE PATENTSCHRIFT

(11) **EP 2 145 925 B1**
(45) Veröffentlichungstag und Bekanntmachung des Hinweises auf die Patenterteilung: **26.10.2011**
(21) Anmeldenummer: 09162558.2
(22) Anmeldetag: 12.06.2009
(51) Int. Cl.: C09B 23/02, G01N 21/64, G11B 7/247

(54) **Verwendung einer langwellig emittierenden Cyaninverbindung als NIR-Fluoreszenzstandard und Kit zur Kalibrierung von Photolumineszenzmesssystem**
Use of a long-wave emitting cyanine compound as an NIR fluorescence standard and kit to calibrate photoluminescence measuring system
Utilisation d'un cyanine émettant à une longueur d'onde elevee en tant que norme de fluorescence NIR et ensemble de calibrage pour un système de mesure de la photoluminescence

(30) Priorität: 17.07.2008 DE 102008040513
(43) Veröffentlichungstag der Anmeldung: 20.01.2010
(73) Patentinhaber: BAM Bundesanstalt für Materialforschung und -prüfung, 12205 Berlin (DE)
(72) Erfinder: Resch-Genger, Dr. Ute, 12203, Berlin (DE); Hoffmann, Dr. Katrin, 12524, Berlin (DE); Behnke, Thomas, 13349, Berlin (DE); Würth, Christian, 10245, Berlin (DE); Hoffmann, Angelika, 12623, Berlin (DE)
(74) Vertreter: Zimmermann & Partner

(56) Entgegenhaltungen:
- EP-A1- 1 584 285
- EP-A2- 1 635 164
- US-A- 5 145 963
- US-A1- 2006 108 509
- US-A1- 2008 057 586
- DATABASE MEDLINE [Online] US NATIONAL LIBRARY OF MEDICINE (NLM), BETHESDA, MD, US; 1991, MURAI M ET AL: "[Indocyanine Green Reference Standard (Control 901) of National Institute of Hygienic Sciences]" XP002552374 Database accession no. NLM1364386 & MURAI M ET AL: "[Indocyanine Green Reference Standard (Control 901) of National Institute of Hygienic Sciences]" EISEI SHIKENJO H KOKU. BULLETIN OF NATIONAL INSTITUTE OF HYGIENIC SCIENCES 1991, Nr. 109, 1991, Seiten 157-159, ISSN: 0077-4715

## Beschreibung

Die Erfindung betrifft die Verwendung einer Cyaninverbindung als Fluoreszenzstandard im Nahinfrarotspektralbereich (NIR), insbesondere als spektraler Fluoreszenzstandard zur Ermittlung der relativen spektralen Empfindlichkeit von Photolumineszenzmesssystemen, zur Ermittlung der spektralen Langzeit-Geräteperformance und der spektralen Empfindlichkeit, als Fluoreszenzquantenausbeutestandard, als Fluoreszenzmarker in flüssigen und festen transparenten Matrices und in flüssigen und festen streuenden Systemen, als molekularer oder partikulärer Fluoreszenzmarker und als integral auslesbarer Fluoreszenzintensitätsstandard in flüssigen und festen transparenten Matrices und in flüssigen und festen streuenden Systemen. Die Erfindung betrifft ferner einen die Verbindung enthaltenden Kit zur rückführbaren Kalibrierung eines Photolumineszenzmesssystems.

### Stand der Technik

Photolumineszenzmessgeräte weisen einen Anregungskanal auf, der eine Anregungslichtquelle und (jedenfalls bei breitbandigen oder polychromatischen Anregungslichtquellen) ein wellenlängenselektierendes optisches Bauelement enthält, sowie mindestens einen meist rechtwinklig zum Strahlengang des Anregungslichtes angeordneten Emissionskanal, mit dem das von dem im Probenraum befindlichen Chromophor nach Lichtabsorption emittierte Licht spektral aufgelöst oder integral aufgezeichnet wird. Oftmals wird über einen Strahlteiler ein definierter Teil des Anregungslichts in einen Referenzkanal eingekoppelt, der ein optisches Bauelement wie einen Spiegel oder einen Streuer und einen (Referenz)Detektor enthält. Mit dem Referenzkanal wird die aktuelle Anregungslichtintensität bei der Anregungswellenlänge aufgezeichnet, um so kurzzeitige Schwankungen der Anregungslichtintensität zu erfassen. Dies erfolgt, indem der Quotient aus dem Emissionssignal (Signal, gemessen im Emissionskanal) und dem Referenzsignal (Signal, gemessen im Referenzkanal) gebildet wird. Nachfolgend werden verschiedene Kategorien von Standards für unterschiedliche Kalibrierungszwecke von Photolumineszenzmessgeräten sowie den dazugehörigen Stand der Technik beschrieben. Dabei wird vorliegend unter dem Begriff "Standard" oder "Fluoreszenzstandard" jeglicher referenzieller Einsatz eines fluoreszierenden Mediums verstanden, ungeachtet dessen, ob gerätespezifische Beiträge oder der Linearitätsbereich eines Detektorsystems des Photolumineszenzmesssystems ermittelt werden sollen oder eine Aussage über die quantitative Fluoreszenzintensität oder Streuintensität einer Probe oder das Vorhandensein einer fluoreszierenden Quelle getroffen werden soll oder dergleichen.

### Anregungs- und Emissionsstandards

Jede Lumineszenzmesstechnik liefert Messdaten, die sich aus analytspezifischen und (unerwünschten) gerätespezifischen Beiträgen zusammensetzen. Letztere spiegeln die Wellenlängenabhängigkeit der im Anregungs- und Emissionskanal des Gerätes enthaltenen Lichtquelle(n) und optischen Bauelemente wider sowie die spektrale Empfindlichkeit der eingesetzten Detektionssysteme. Die Vergleichbarkeit von Lumineszenzdaten über Geräte- und Laborgrenzen hinaus, die Erfassung der Gerätealterung, die Rückführbarkeit von Lumineszenzdaten (gemäß EN ISO/IEC 17025) und die Optimierung von Lumineszenzmessmethoden erfordern die Ermittlung dieser gerätespezifischen Effekte. Dies gilt auch für Messmethoden, welche die Emission von Luminophoren mit spektral unterschiedlichen Emissionsspektren vergleichen wie z.B. die Bestimmung von Fluoreszenzquantenausbeuten und für Emissionsmessungen bei verschiedenen Anregungswellenlängen. Die Erfassung dieser gerätespezifischen Effekte erfolgt durch die Ermittlung sogenannter Emissions- und Anregungskorrekturfunktionen, welche die Wellenlängenabhängigkeit und Polarisationsabhängigkeit der spektrale Empfindlichkeit der eingesetzten Detektionskanäle (Emissionskorrektur) und die Wellenlängenabhängigkeit und Polarisationsabhängigkeit der spektralen Beleuchtungsstärke am Probenort bzw. der Anregungslichtintensität (Anregungskorrektur) beinhalten.

Die einfache und rückführbare Kalibrierung von Lumineszenzmesssystemen erfordert rückführbare und idealerweise zertifizierte Transferstandards, die unter identischen Bedingungen wie typische Proben vermessen werden können, die für möglichst viele verschiedene Gerätetypen, Formate und Messgeometrien geeignet sind und die einen weiten Spektralbereich, typischerweise UV/vis, vis/NIR oder UV/vis/NIR, abdecken. Mit zunehmender Nutzung des NIR-Spektralbereiches für viele verschiedene Fluoreszenzapplikationen (z.B. optische Bildgebung; erstes diagnostisches Fenster von ca. 650 bis 900 nm) gewinnen Standards für den NIR-Spektralbereich stark an Bedeutung. Für die Erstellung von Anregungs- und Emissionskorrekturfunktionen mit einer möglichst geringen Messunsicherheit müssen Probe und Transferstandard unter identischen Messbedingungen vermessen werden, also mit der gleichen Messgeometrie, den gleichen Probenbehältern und -formaten, den gleichen Polarisatoreinstellungen, Filtern und Abschwächen sowie den gleichen Einstellungen für die Monochromatorspaltbreite, Photomultiplierspannung, das "Sampling Interval" und die Integrationszeit oder Scangeschwindigkeit. Für die Erfüllung dieser Voraussetzungen und die Verlässlichkeit der Emissions- und der Anregungskorrektur ist es daher wesentlich, dass sich der zur Kalibrierung verwendete Transferstandard und die zu untersuchenden lumineszierenden Proben hinsichtlich ihrer spektralen Strahldichte bzw. wellenlängenabhängigen Lumineszenzintensität möglichst wenig unterscheiden.

Bekannt ist der Einsatz zertifizierter physikalischer Transferstandards zur Erfassung der gerätespezifischen Effekte. Zur Kalibrierung des Anregungskanals kommen dabei typischerweise zertifizierte Empfängernormale zum Einsatz und für die Kalibrierung des Emissionskanals zertifizierte Strahldichtenormale bzw. Standardlampen. Für den Einsatz physikalischer Transfernormale nachteilig sind die erforderlichen guten Optikkenntnisse des Anwenders, kostenintensive Rekalibrierungen, brenndauerabhängige Änderungen der Wellenlängenabhängigkeit der spektralen Strahldichte von Standardlampen, ggf. unterschiedliche Messgeometrien und Messparameter für Probe und Standard und im Falle der Emissionskorrektur mit Standardlampen die unterschiedlichen Emissionscharakteristika von Lampe und Probe und die um mindestens zwei bis vier Größenordnungen unterschiedlichen spektralen Strahldichten von Transfernormal und einer typischen lumineszierenden Probe. Dies alles kann zu fehlerbehafteten und unbefriedigenden Korrekturfunktionen führen und ist zudem aufwändig und kostenintensiv.

Für die Anregungskorrektur werden auch so genannte Quantenzähler eingesetzt. Dies sind hochkonzentrierte Farbstofflösungen, die einfallende Lichtquanten praktisch vollständig absorbieren und mit einer wellenlängenunabhängigen Fluoreszenzquantenausbeute in emittierte Photonen umwandeln. Quantenzähler liefern sehr konzentrations- und geometrieabhängige Messdaten und sind zudem anfällig für Polarisationseffekte. Standardisierte Kalibrierverfahren mit definierten Konzentrationen in Kombination mit definierten Messgeometrien sind für Quantenzähler nicht verfügbar. Bekannt sind ebenfalls so genannte chemische Transfer- bzw. Fluoreszenzstandards (Emissions- und/oder Anregungsstandards), die typischerweise auf der Photolumineszenz einer chemischen Verbindung basieren und zusammen mit ihren (idealerweise zertifizierten) spektral korrigierten, also geräteunabhängigen Emissions- und/oder Anregungsspektren eingesetzt werden. Solche Fluoreszenzstandards werden in verschiedenen Formen eingesetzt, insbesondere in Form von Lösungen oder eingebettet in feste Polymer- oder Glasmatrizes. Vorteil von Fluoreszenzstandards, insbesondere in Form von Lösungen, ist, dass diese den zu untersuchenden lumineszierenden Proben hinsichtlich ihrer Lumineszenzintensität und Emissionscharakteristika stark ähneln. Fluoreszenzstandards erlauben somit die (spektrale) Kalibrierung unter den bei typischen Probenmessungen angewandten Bedingungen. Fluoreszenzstandards lassen sich in vielen verschiedenen Gerätetypen, Formaten und Messgeometrien vermessen und sind somit auch zur Kalibrierung von Fluoreszenzmesssystemen mit speziellen Probengeometrien oder -formaten geeignet, beispielsweise mit Mikroküvetten, Mikrotiterplatten oder Kryostatsystemen. Allein Fluoreszenzstandards erlauben die Durchführung der Kalibrierung in der selben Küvetten- und Messanordnung wie die eigentliche Probenmessung und erfüllen die Anforderung "gleiche Messbedingungen für Standard und Probe".

Voraussetzungen für die Eignung als chemischer Transferstandard ist dabei die problemspezifische Farbstoffauswahl. Dies impliziert beispielsweise breite, glatte und unstrukturierte Emissionsspektren im Falle von Emissionsstandards für die Ermittlung der relativen spektralen Empfindlichkeit zur Minimierung des Einflusses der spektralen Spaltbreite des Emissionsmonochromators und breite, glatte und unstrukturierte Absorptions- bzw. Anregungsspektren im Falle von Anregungsstandards. Außerdem müssen die Fluoreszenzquantenausbeuten der Farbstoffe moderat bis hoch sein, um Signalbeiträge durch Störfluoreszenz, Streuung oder Eigenfluoreszenz vom Lösungsmittel zu minimieren. Im UV/vis-Spektralbereich bedeutet dies Fluoreszenzquantenausbeuten von mindestens 30%, im NIR-Spektralbereich von mindestens ca. 10%, bevorzugt aber ≥ 20%. Außerdem sollten im Falle von flüssigen Systemen Polarisationseffekte minimiert werden durch die Wahl von Chromophoren mit einer möglichst geringen Anisotropie der Emission (UV/vis-Spektralbereich ≤ 0,05, NIR-Spektralbereich 0,15-0,20). Dies ist die Voraussetzung für die einfache Charakterisierung von Fluoreszenzmesssystemen ohne Polarisatoren. Bei festen Systemen gelingt eine Minimierung der Emissionsanisotropie nur in Ausnahmefällen, z.B. mit lonendotierten Gläsern. Für eine Gerätecharakterisierung mit minimaler Messunsicherheit muss für anisotrop emittierende Standards bei der Charakterisierung von Fluoreszenzmesssystemen ohne Polarisatoren der polarisationsbedingte Beitrag des Standards zur Messunsicherheitsbilanz der Gerätecharakterisierung rechnerisch erfasst werden. Für chemische Transferstandards müssen außerdem neben den mit einer bekannten Messunsicherheit charakterisierten, applikationsrelevanten Lumineszenzeigenschaften wie dem korrigierten Emissions- und/oder Anregungsspektrum auch die Reinheit der eingesetzten Verbindungen und, für den Einsatz in Lösung, auch die Reinheit des Lösungsmittels bekannt sein, um reproduzierbare Messungen zu garantieren. Darüber hinaus sind Angaben zur Langzeitstabilität (thermisch und photochemisch; Testung unter applikationsrelevanten Bedingungen) und im Falle von festen Systemen zur Homogenität erforderlich. Im Falle von Systemen, die für die einmalige Nutzung ausgelegt sind, muss die Reproduzierbarkeit gewährleistet sein.

In der Fachliteratur sind zahlreiche Empfehlungen zu chemischen Transferstandards wie potenziellen (sekundären) Emissions- und Anregungsstandards umfassend diskutiert und vereinzelt auch zu Standard-Kombinationen für die Abdeckung eines möglichst breiten Spektralbereichs. Mit äußerst wenigen Ausnahmen sind für keinen der literaturbekannten oder kommerziell verfügbaren Fluoreszenzstandards alle applikationsrelevanten Eigenschaften verfügbar, wie etwa die Reinheit des verwendeten Farbstoffs, seine Anisotropie, die Wellenlängenabhängigkeit der Fluoreszenzspektren und der Fluoreszenzquantenausbeute, die Temperaturabhängigkeit der Fluoreszenzeigenschaften im applikationsrelevanten Temperaturbereich sowie die Photostabilität und die thermische Stabilität in der verwendeten Matrix. Darüber hinaus fehlen zumeist Angaben zur Kalibrierung des eingesetzten Fluorometers, zu den verwendeten Messparametern und zur Messunsicherheit. Damit sind diese Literaturdaten nur von sehr eingeschränktem Nutzen. Die zertifizierten Fluoreszenzstandards, nämlich Chininsulfat-Dihydrat vom National Institute for Standards and Technology (NIST, USA), die Standards der Bundesanstalt für Materialforschung und -prüfung (BAM, Deutschland) [DE 10 2004 044 717 A; D. Pfeifer et al., J. Fluoresc. 2006, 16, 581] und zweier Glasstandards vom NIST (SRM 1940 und SRM 1941) sind bislang die einzigen Emissionsstandards, deren korrigierte Emissionsspektren mit einem rückführbar charakterisierten Referenz-Fluorometer mit bekannter wellenlängenabhängiger Messunsicherheit zertifiziert wurden.

Der Spektralbereich, in dem ein Fluoreszenzstandard zur Kalibrierung eingesetzt werden kann, ist durch die Lage und Breite seiner Fluoreszenzbande limitiert. Der Emissionsstandard Chininsulfat deckt z.B. nur den Spektralbereich von ca. 400 bis 550 nm ab. Um ein Photolumineszenzmesssystem im gesamten UV/vis/NIR-Spektralbereich rückführbar zu kalibrieren, ist somit die Kombination mehrerer hinsichtlich ihrer Fluoreszenzspektren aufeinander abgestimmter Chromophore mit (idealerweise zertifizierten) korrigierten Fluoreszenzspektren erforderlich. Dabei sollten die Schnittpunkte benachbarter Spektren ausreichend hohe Fluoreszenzintensitäten aufweisen, um so die Verknüpfung der Einzelkorrekturkurven zu einer Gesamtkorrekturfunktion mit möglichst geringer Messunsicherheit zu gewährleisten. Für derartige Chromophorkombinationen zur Ermittlung der Emissionskorrektur im UV/vis/NIR-Spektralbereich gibt es wenige Beispiele, für Anregungsstandard-Kombinationen sogar nur ein Beispiel.

Bekannt ist beispielsweise eine - kommerziell nicht mehr erhältliche - Kombination von Emissionsstandards, die aus fluorophorhaltigen Polymerfolien mit NIST-zertifizierten Emissionsspektren besteht. Diese erfordert jedoch einen Front-Face-Probenhalter und eine definierte Messgeometrie sowie die Verwendung von Polarisatoren und ist damit grundsätzlich für die Kalibrierung einfacher Lumineszenzmesssysteme nicht geeignet. Zudem weichen die erforderlichen Messbedingungen von typischen Bedingungen für flüssige Proben ab. Darüber hinaus sind chromophorhaltige Polymethylmethacrylat (PMMA)-Blöcke in Küvettenform der Firma Starna als Emissions- und Anregungsstandards bekannt, die jedoch Polarisationseffekte sowie teilweise stark strukturierte Emissions- und Anregungsspektren aufweisen, was ihre Eignung limitiert. Steil ansteigende Flanken und eine Strukturierung führen zu einer Abhängigkeit der Fluoreszenzspektren vom Monochromator-Bandpass bzw. der Monochromator-Spaltbreite und zu einer Erhöhung der Kalibrierunsicherheit. Es fehlen zudem Angaben zur Homogenität der Farbstoffverteilung und zur photochemischen und thermischen Langzeitstabilität; so nimmt jedenfalls die Farbstoffkonzentration des Naphthalin-haltigen Polymerblocks mit der Zeit ab. Darüber hinaus können bei diesem Ansatz - wie bei allen Ansätzen, in denen Chromophore in eine feste Matrix eingebracht werden, - Probleme durch lokale Ausbleicheffekte und die lokale Bildung von Photoprodukten entstehen. Ein weiteres Beispiel für eine Emissionsstandardkombination sind Farbstofflösungen von der Firma Molecular Probes, die jedoch ebenfalls Fluorophore beinhalten, die aufgrund ihrer sehr schmalen, steil ansteigenden Emissionsspektren und des großen Überlappungsbereichs zwischen Absorption und Emission als Emissionsstandards ungeeignet sind. Eine weitere bekannte Kombination von Emissionsstandards umfasst Fluorophore, die teilweise eine zu geringe Photostabilität (Tryptophan, Coumarin 102), strukturierte und steil ansteigende Emissionsbanden (alpha-NPO) eine große Fluoreszenzanisotropie (LDS 751) oder vergleichsweise geringe Stabilitäten (Styryl 8) aufweisen (J.A. Gardecki & M. Maroncelli, Appl. Spectrosc. 1998, 52, 1179). Ein aus einer Lösung und zwei Gläsern bestehender Emissionskalibriersatz des NIST ist aufgrund der langen Abklingzeiten der verwendeten Chromophore der Gläser nur bedingt für die Kalibrierung von Spektrometern mit gepulsten Lichtquellen geeignet. Außerdem zeigt der Farbstoff SRM 1942 ein leicht strukturiertes Emissionsspektrum. Der bereits oben erwähnte Farbstoffkit der BAM (DE 10 2004 044 7717 A) stellt ein weiteres Beispiel für eine Standardkombination dar. Sein Emissionsbereich deckt den UV/vis-Spektralbereich von etwa 300 bis 730 nm ab.

Im Gegensatz zum UV/vis-Spektralbereich gibt es bislang keinen zertifizierten Emissionsstandard für den NIR-Spektralbereich. Grund hierfür ist, dass die überwiegende Mehrzahl der im NIR-Spektralbereich emittierenden Fluorophore schmale strukturierte Absorptions- und Emissionsbanden und einen großen Überlappungsbereich von Absorption und Fluoreszenz aufweist und damit für eine Applikation als NIR-Emissionsstandard ungeeignet sind. Die einzigen, bislang bekannten spektralen Fluoreszenzstandards für den NIR-Spektralbereich sind LDS 751 bzw. Styryl 8, ein Styrylfarbstoff, dessen Emissionsspektrum in Methanol den Spektralbereich von ca. 650 bis 840 nm abdeckt; N,N-Dimethylamino-m-nitrobenzol (N,N-DMAMB), dessen breites, im langwelligen Bereich der Emissionsbande auslaufendes Emissionsspektrum in einer n-Hexan-Benzol-Mischung den Spektralbereich von ca. 650 bis 760 nm abdeckt; 4-Diamino-4'-nitrostilben (4,4'-DMANS), dessen Emissionsspektrum in o-Dichlorbenzol den Spektralbereich von ca. 590 bis 940 nm abdeckt, Styryl 9M (DE 10 2004 044 717 A), dessen Emissionsspektrum in Acetonitril den Spektralbereich von ca. 670 bis 970 nm abdeckt, und dotierte Gläser bzw. Glaskeramiken, deren Emissionsspektren z.B. in der Matrix Lanthan-Phosphat-Glas den Spektralbereich von ca. 750 bis 950 nm abdecken (EP 1 696 224 A). Nachteilig an LDS 751 sind seine hohe Emissionsanisotropie und limitierte Stabilität, wohingegen bei N,N-DMAMB und 4,4'-DMANS die für Nitroverbindungen typischen geringen Fluoreszenzquantenausbeuten und die toxischen Lösungsmittel problematisch sind. Kritisch an Styryl 9M ist die geringe thermische und photochemische Stabilität sowie seine niedrige Fluoreszenzquantenausbeute (< 10%) in polaren Lösungsmitteln.

Es lässt sich somit feststellen, dass derzeit kein rückführbarer und langzeitstabiler Emissionsstandard für den NIR-Spektralbereich oberhalb von 700 nm verfügbar ist, der das diagnostische Fenster von etwa 650 bis 900 nm abdeckt, sich durch glatte, unstrukturierte und breite Emissionsspektren, eine gute Langzeitstabilität und eine vergleichsweise hohe Fluoreszenzquantenausbeute (≥ 20%), eine Emissionsanisotropie ≤ 0,20 in einem polaren, protischen Lösungsmittel wie Ethanol auszeichnet sowie durch eine geringe Überlappung von Absorption und Fluoreszenz und der diese Eigenschaften sowohl in typischen kommerziell verfügbaren polaren Lösungsmitteln zeigt als auch in festen Matrices unterschiedlicher Polarität.

### Fluoreszenzquantenausbeutestandards

Die Photolumineszenzquantenausbeute (φ) ist das Maß für die Effizienz der Konversion von zuvor absorbiertem Licht in emittierte Photonen und somit der fundamentalste Parameter für die Charakterisierung von optischen Materialien, wie (Laser)Farbstoffen, Phosphoren und LED/OLED-Systemen. Viele konventionelle Messverfahren für die Photolumineszenzquantenausbeute funktionieren nur dann zuverlässig, wenn die Probe besondere Anforderungen erfüllt, z.B. hinsichtlich des Stokes-Shifts, der Emissionsanisotropie, der Größe der Photolumineszenzquantenausbeute und der optischen Eigenschaften der Matrix (Transmissionsverhalten etc.), und erfordern einen gut charakterisierten Standard.

Die Messung von Lumineszenzquantenausbeuten erfolgt im Allgemeinen durch relative optische, seltener durch kalorimetrische Verfahren. Relative optische Messverfahren verwenden grundsätzlich eine Referenzprobe bzw. einen sogenannten Fluoreszenzquantenausbeutestandard mit bekannter Fluoreszenzquantenausbeute, dessen spektrale Strahldichte bzw. Emissionsintensität mit der Probe direkt verglichen wird. Dieser möglichst gut charakterisierte Quantenausbeutestandard sollte der Probe möglichst ähnlich sein, beispielsweise hinsichtlich seiner spektralen Absorptions- und Fluoreszenzeigenschaften, seiner Absorption bei der Anregungswellenlänge und der Transmissionseigenschaften seiner Matrix. Im Vergleich zum UV/vis-Spektralbereich gibt es bislang nur sehr wenige Empfehlungen zu NIR-Fluoreszenzquantenausbeutestandards. Der oftmals als NIR-Quantenausbeutestandard für die Bestimmung der Fluoreszenzquantenausbeute von biomedizinisch relevanten Systemen, wie beispielsweise fluoreszierenden Kontrastmitteln für die optische Bildgebung, verwendete Fluorophor IR 125 bzw. Indocyanine Green ist nicht gut charakterisiert, zeigt nur eine geringe Fluoreszenzquantenausbeute in polaren Lösungsmitteln (kleiner 10%), hat Stabilitätsprobleme, bildet schnell nicht-fluoreszente Aggregate insbesondere in wässrigen Medien und ist aufgrund seiner großen Überlappung von Absorption und Fluoreszenz sehr anfällig für innere Filter Effekte (Reabsorption). Insgesamt gibt es bislang keinen rückführbaren, zertifizierten und langzeitstabilen Fluoreszenzquantenausbeutestandard, weder für den UV/vis- noch für den NIR-Spektralbereich, und kein vollständig charakterisiertes System. Typischerweise fehlen Angaben zur Charakterisierung des verwendeten Fluorometers, Angaben zu den verwendeten Messparametern und Angaben zur Reinheit des eingesetzten Farbstoffs. Relative optische Messverfahren erfordern im Allgemeinen transparente, optisch dünne Lösungen oder Festkörper. Es sind inzwischen auch Ansätze zur Bestimmung der Fluoreszenzquantenausbeute von optisch dichten Systemen bekannt. Besonders problematisch ist generell die Bestimmung der Fluoreszenzquantenausbeute von schwach und insbesondere von stark streuenden Systemen.

### Standards zur Überprüfung der spektralen Geräteperformance, der Langzeitstabilität der spektralen Gerätecharakteristika und der spektralen Sensitivität

Standards zur Überprüfung der spektralen Geräteperformance und der Langzeitstabilität der spektralen Gerätecharakteristika, wie der (relativen) spektralen Empfindlichkeit und der spektralen Sensitivität, sind notwendig, um beispielsweise den durch die Alterung von optischen und optisch-elektronischen Bauteilen bedingten Gerätedrift zu erfassen und eine Vergleichbarkeit der an verschiedenen Tagen durchgeführten Messungen von relativen Fluoreszenzintensitäten zu ermöglichen. Die Verfügbarkeit solcher Standards ist außerdem unerlässlich für die im Rahmen von Laborakkreditierungen nach ISO 17025 notwendige regelmäßige Durchführung von Geräteüberprüfungen. Der bislang einzige etablierte Test zur Überprüfung der Geräteperformance und der Gerätelangzeitstabilität ist der sogenannte Raman-Test. Dazu wird nicht-fluoreszentes Reinstwasser bei 350 nm bestrahlt und die Intensität der Raman-Streuung bei 397 nm gemessen. Dieser Test ist nur für den UV-Spektralbereich geeignet und erfasst aufgrund der sehr geringen Halbwertsbreite der Ramanbande nur einen sehr kleinen Spektralbereich. Zudem wird derzeit versucht, Gläser, die mit einer Mischung aus verschiedenen, schmalbandig im Spektralbereich von ca. 400 bis 700 nm emittierenden Seltenerd-Fluorophoren dotiert sind, als Day-to-Day-Intensity-Standards für verschiedene Fluoreszenzmesstechniken zu etablieren (U. Resch-Genger et al., J. Fluoresc. 2005, 15, 347). Diese Gläser, deren Emissionsbanden einen breiten Spektralbereich abdecken, sind aber nicht für den für medizinisch-diagnostische Fluoreszenzapplikationen relevanten NIR-Spektralbereich von ca. 650 bis 900 nm geeignet.

### Standards zur Bestimmung des Linearitätsbereichs von Lumineszenzdetektionssystemen

Voraussetzung für die Bestimmung der Emissions- und Anregungskorrekturfunktionen von Lumineszenzmesssystemen und für jede quantitative Lumineszenzanalytik ist die Kenntnis des Linearitätsbereichs der verwendeten Detektionssysteme. Dieser hängt im Falle von gängigen Detektoren wie PMTs und CCD-Systemen von der Detektionswellenlänge ab. Hierfür gibt es bislang keine einheitliche Vorgehensweise. Die einzige, einen Emissionsstandard einsetzende Methode beruht auf Chininsulfat-Dihydrat. Des Weiteren sind seit kurzem vom NIST zertifizierte Fluoreszein-Lösungen (NIST SRM 1932; Invitrogen Fluorescein NIST-Traceable Standard F36915) sowie die aus mehreren Fluorophoren bestehenden "ReadyPlate Microplate Intensity Standards" von der Firma Molecular Probes verfügbar und die Fluorescence Reference Standards der Firma MATECH (Chromophore eingebaut in feste Matrices) für verschiedene Anregungs- und Emissionswellenlängen im UV/vis-Spektralbereich.

Farbstoffe, die zur Bestimmung des Linearitätsbereichs von Fluoreszenzdetektionssystemen geeignet sind, zeichnen sich insbesondere durch eine möglichst geringe Überlappung von Absorption und Fluoreszenz aus. Dies ist Voraussetzung dafür, dass die Emissionsspektren bei Extinktionen bis ca. 0,1 (1-cm-Küvette) noch konzentrationsunabhängig sind. Im Allgemeinen vorteilhaft sind auch hier glatte, unstrukturierte Emissionsspektren, die einen möglichst großen Emissionsspektralbereich abdecken. Eine zur Ermittlung des Linearitätsbereichs von Fluoreszenzdetektionssystemen mit Chininsulfat-Dihydrat beschriebene Methode (ASTM E 578-83) ist aufgrund der Empfehlung von sehr hohen Farbstoffkonzentrationen problematisch, da dabei Verfälschungen durch innere Filtereffekte auftreten können. Die Wellenlängenbereiche, für die das Verfahren eingesetzt werden kann, sind durch das Absorptions- und das Emissionsspektrum von Chininsulfat-Dihydrat limitiert. Die Linearität von gängigen Detektoren wie Photomultipliern hängt aber von der Wellenlänge ab. Integral messende Fluoreszenzgeräte, wie Filterfluorometer, viele Mikrotiterplattenauslesegeräte und Scanner für die optische Bildgebung, sind in der Wahl der Anregungs- und Emissionswellenlängen begrenzt durch die verwendeten Anregungslichtquellen (Laser oder Lampe mit Anregungsfilter) und die integrale Detektion (Emissionsfilter und Detektor). Die zur Bestimmung des Linearitätsbereichs von Fluoreszenzdetektionssystemen ebenfalls geeigneten BAM-Standards F001 bis F005 decken nur den UV/vis-Spektralbereich ab und sind nur zur Bestimmung des Linearitätsbereichs für Wellenlängen kleiner als 700 nm geeignet. Seit kurzem sind zudem Fluoreszein-Lösungen für die Ermittlung des Linearitätsbereichs kommerziell verfügbar. Diese sind jedoch aufgrund des vergleichsweise schmalen Absorptions- und Emissionsspektrum von Fluoreszein nur in einem engen visuellen Spektralbereich einsetzbar. Problematisch ist auch hier die große Überlappung der Absorptions- und Emissionsspektren. Dies gilt auch für die für verschiedene Anregungs- und Emissionswellenlängen einsetzbaren RediPlate Microplate Intensity Standards der Firma Invitrogen bzw. Molecular Probes. Die MATECH-Standards sind in Mikrotiterplatten integriert und damit nur für Mikrotiterplattenauslesegeräte geeignet. Eine Variation der Konzentration und damit der Fluoreszenzintensität für eine problemspezifische Anpassung durch den Anwender ist so nicht möglich. Die Absorptionsspektren der Chromophore werden nicht angegeben.

### Fluorophor-dotierte Partikel im Nano- und Mikrometerbereich

Farbstoff-beladene, nanometer- und insbesondere mikrometergroße Partikel sind von großer Bedeutung für die Charakterisierung von Fluoreszenzmikroskopen und Durchflusszytometern. Mikrometergroße Partikel werden in zunehmendem Maße auch als Plattformen für eine große Anzahl an bioanalytischen Applikationen (Assays etc.) und als Sensorsysteme eingesetzt, hier oft in Kombination mit mikroskopischen oder durchflusszytometrischen Detektionsmethoden und FRET-Ansätzen. Diese zumeist oberflächenfunktionalisierten (z.B. mit Amino- oder COOH-Gruppen zur weiteren Funktionalisierung oder mit einem Biomolekül, etwa einem Antikörper, Streptavidin oder Biotin) Partikel sind oftmals mit mindestens einem Farbstoff kodiert, der bei typischerweise verwendeten Anregungswellenlängen angeregt werden kann. Mitunter werden auch Farbstoffkombinationen verwendet, die im Allgemeinen bei derselben Anregungswellenlänge anregbar sind, aber bei unterschiedlichen Emissionswellenlängen emittieren ("optical barcodes"). Nanometergroße fluoreszierende Partikel spielen auch als *in vivo* einsetzbare Sensorsysteme und als hochfluoreszente Marker in der biomedizinischen Diagnostik eine immer größere Rolle. Daher ist eine Vielzahl an Fluorophor-beladenen Partikeln (verschiedene Matrices mit verschiedenen Oberflächenfunktionalisierungen etc.) verfügbar, insbesondere mikrometergroße Partikel für den UV/vis-Spektralbereich. Die Beladung erfolgt dabei je nach Polymermaterial und Fluorophor entweder durch Quellung, Einpolymerisation oder durch Anbindung von Fluorophoren an Oberflächenfunktionalitäten. Im Gegensatz zum letzteren Fall sind die Fluorophore in den beiden ersten Fällen gekapselt, also vor äußeren Einflüssen geschützt. Damit werden ihre optischen Eigenschaften nicht von der Polymermatrix bestimmt, sondern system- bzw. anwendungsspezifisch von der jeweiligen Mikroumgebung des Farbstoffes.

Die Mehrzahl der in Partikeln gekapselten Fluorophore sind Farbstoffe mit schmalen, strukturierten Absorptions- und Emissionsspektren und einer großen Überlappung zwischen Absorption und Fluoreszenz, wie Fluoreszein-, Rhodamin- oder BODIPY-Farbstoffe (Farbstoffe mit einer "resonanten Emission"). Beispiele für gekapselte Fluorophore mit relativ breiten und unstrukturierten Absorptions- und Fluoreszenzbanden (Farbstoffe mit Charge Transfer (CT)-Zuständen oder einer Emission von einem CT-Zustand) sind mit Nilrot oder Nile Blue dotierte Melamin-Partikel (Fa. Microparticles GmbH oder Sigma Aldrich). Die mit diesen Farbstoffen beladenen mikrometergroßen Partikel emittieren aber typischerweise unterhalb 700 nm. Außerdem sind Polystyrol-Partikel, die mit Farbstoffen unbekannter Struktur dotiert sind, unter der Handelsbezeichnung FluoSpheres (Fa. Invitrogen) verfügbar, jedoch ohne Herstellerangaben zu den Farbstoffstrukturen. Diese Farbstoffe zeigen aber relativ schmale und strukturierte Emissionsbanden und eine starke Überlappung von Absorption und Fluoreszenz (resonante Emission) und sind damit nicht als spektrale Fluoreszenzstandards geeignet. Auch für viele andere Applikationen als Fluoreszenzintensitätsstandards ist diese große Überlappung von Absorption und Emission ungünstig, da sie schon bei vergleichsweise geringen Farbstoffbeladungsdichten zu einer Konzentrationsabhängigkeit der Emissionsspektren aufgrund von Reabsorption führt.

### Streuende spektrale Fluoreszenzstandards und Fluoreszenzstandards zur Bestimmung der Fluoreszenzquantenausbeute von streuenden und fluoreszierenden Systemen bzw. zur Überprüfung von dafür eingesetzten Messverfahren und -aufbauten

Generell spielt die Messung von Fluoreszenz in streuenden Systemen eine große Rolle für bioanalytische und medizinische Applikationen der Fluorometrie (z.B. Fluoreszenzmessungen in streuendem Gewebe und Monitoring von biologischen Prozessen bei prozessanalytischen Applikationen) und für viele Applikationen in der Materialforschung und -analytik (z.B. Charakterisierung von anorganischen Festkörperleuchtstoffen oder Phosphoren, Nanoleuchtstoffen in OLEDs oder lumineszenzaktivierten photonischen Kristallen). Dabei kann es sich hinsichtlich der Streueigenschaften sowie des Spektralbereichs von Absorption und Emission und der spektralen Überlappung von Absorption und Fluoreszenz um stark variierende Systeme handeln. Beispiele sind u.a. anorganische und polymere Matrices (z.B. dotierte Sol-Gel-Gläser oder Polymethylmethacrylat(PMMA)-Komposite, Polystyrol-Partikel etc.) mit vergleichsweise geringer Streuung bis zu stark streuenden Systemen mit denselben Bestandteilen, deutlich streuende YAG:Ce-Systeme und optisch dichte Phosphore oder Farbstoff-beladene Cellulose.

Auch für die Charakterisierung der Fluoreszenzeigenschaften von streuenden und fluoreszierenden Systemen nimmt die Relevanz des NIR-Spektralbereichs zu. So ist beispielsweise für fluorometrische Untersuchungen an Geweben mit Verfahren der optischen Bildgebung, z.B. für die Frühdiagnostik von krankheitsspezifischen Veränderungen auf molekularer Ebene insbesondere der Spektralbereich von ca. 650 bis 900 nm relevant. Hierfür werden als Standards sogenannte Phantome eingesetzt, die aus einem NIR-Fluorophor und einem festen oder flüssigen streuenden Medium bestehen. Dieses Medium besteht dabei im Allgemeinen aus einer Matrix mit bekanntem Brechungsindex und einem Streuer, dessen Streueigenschaften z.B. über den Brechungsindex (Brechungsindexunterschied Matrix - Streuer) und/oder seine Größe (z.B. im Falle von Partikeln) kontrolliert und variiert werden können. Typischerweise werden Fettemulsionen oder in eine Flüssigkeit oder feste Polymermatrix eingebrachte Mikropartikel aus SiO₂, PMMA oder Polystyrol als Streuer verwendet. Dabei werden die Absorption-, Fluoreszenz- und Streueigenschaften der Standards möglichst auf die zu vermessenden Proben angepasst. Dies gilt in gleichem Maße z.B. auch für Standards für die Bestimmung der Fluoreszenz- oder Photolumineszenzquantenausbeute von anorganischen oder anorganisch-organsichen Hybridmaterialien wie LED- und OLED-Systeme. Die für den NIR-Bereich eingesetzten Fluorophore sind typischerweise symmetrische Cyaninfarbstoffe wie Indocyanine Green (ICG) oder IR-125, Diethylthiatricarbocyaniniodid (DTTCI), und IR-140, die sich jedoch durch strukturierte Absorptions- und Emissionsbanden auszeichnen sowie einen großen Überlappungsbereich von Absorption und Fluoreszenz. Solche resonant emittierenden Systeme sind sehr anfällig für innere Filtereffekte (Reabsorption).

Es sind außerdem fluoreszierende und streuende Systeme bekannt, die aus einer flüssigen oder festen Matrix, einem Fluorophor und Partikeln bestehen. Dabei können für einen gegebenen Fluorophor durch die Wahl der Partikelgröße und der Differenz der Brechungsindices von Matrix und Partikelmaterial die Streueigenschaften bestimmt und kontrolliert gesteuert werden. Solche Systeme bilden die Basis für streuende Fluoreszenzstandards z.B. für die Überprüfung von Fluoreszenzmessungen an streuenden und fluoreszierenden Systemen. Auch hier sind streuende und fluoreszierende Systeme auf der Basis von Emittern mit breiten unstrukturierten Absorptions- und Emissionsbanden und vergleichsweise geringer spektraler Überlappung erwünscht. Es gibt bislang kaum Standards und Messmethoden für die Charakterisierung von Fluoreszenzmesssystemen für Messungen an streuenden und fluoreszierenden Systemen. Die in der optischen Bildgebung als Phantome empfohlenen fluoreszierenden und streuenden Standards basieren alle auf symmetrischen oder asymmetrischen Cyaninen, die sich durch schmale und strukturierte Absorptions- und Emisisonsbanden und eine deutliche Überlappung von Absorption und Fluoreszenz auszeichnen und somit empfindlich auf innere Filtereffekte (Reabsorption) reagieren. Zudem gibt es keine Systeme, bei denen für einen breitbandig absorbierenden und im NIR emittierenden Farbstoff über die Fluorophorkonzentration bzw. -beladungsdichte, die Partikelgröße und -konzentration und die Wahl des Matrix- und des Partikelmaterials die Absorptions-, Fluoreszenz- und Streueigenschaften systematisch und kontrolliert variiert werden können.

### Fluoreszenzmarker

Ein stetig wachsendes Anwendungsgebiet von Fluoreszenzfarbstoffen sind Fluoreszenzmarker und Reaktivfarbstoffe z.B. für die Fluoreszenzmarkierung und/oder den fluorometrischen Nachweis von funktionellen Gruppen und von nicht-fluoreszenten oder nur im UV-Bereich fluoreszierenden Analyten wie (Bio)Makromolekülen, Metallionen oder Anionen. Solche Systeme können auch modular aufgebaute Sensormoleküle darstellen, die z.B. aus einem targetspezifischen Liganden und einem daran kovalent gebundenen Chromophor bestehen. In zunehmendem Maße werden auch partikuläre Label eingesetzt. Diese partikulären Marker bestehen aus einer Vielzahl an Fluorophoren, die entweder in nano- oder mikrometergroße organische oder anorganische Partikel eingebaut sind (gekapselte Chromophore) oder an die Oberflächen solcher Partikel gebunden sind. Die Partikel können dann weiter funktionalisiert werden, z.B. entweder mit targetspezifischen Liganden bzw. Oberflächenfunktionalitäten oder mit chemischen Gruppen für die kovalente Anbindung an Analyte wie (Bio)Makromoleküle. Auch für solche Applikationen im Bereich der Fluoreszenzanalytik gewinnt der NIR-Spektralbereich zunehmend an Bedeutung. Inzwischen sind auch etliche Label und Marker für den NIR-Spektralbereich verfügbar, bei denen es sich typischerweise um Rhodamine, BODIPY-Farbstoffe, Porphyrine, Phthalocyanine und insbesondere um Cyanine und um Hemicyanine handelt. Diese oftmals auf typische Anregungswellenlängen von Fluoreszenzmesssystemen hinsichtlich ihrer Absorption angepassten Verbindungen zeichnen durch schmale, stark überlappende und strukturierte Absorptions- und Emissionsbanden aus und mit zunehmend langwellig verschobener Lage von Absorption und Emission durch eine zunehmend geringer werdende Fluoreszenzquantenausbeute in polaren Lösungsmitteln sowie eine abnehmende Fluoreszenzlebensdauer.

Vorteilhaft für viele Applikationen als Fluoreszenzmarker wäre ein NIR-Fluorophor mit im Gegensatz zu den bereits genannten Verbindungen vergleichsweise breiten, unstrukturierten Absorptions- und Emissionsbanden, einem möglichst geringen spektralen Überlappungsbereich von Absorption und Fluoreszenz in Kombination mit einer vergleichsweise hohen Fluoreszenzquantenausbeute (bevorzugt ≥ 20%) in vielen verschiedenen Matrices und möglichst auch in Matrices unterschiedlicher Polarität. Darüber hinaus ist eine möglichst große photochemische und thermische Stabilität wünschenswert.

### Beschreibung der Erfindung

Der vorliegenden Erfindung liegt die Aufgabe zugrunde, einen Fluoreszenzfarbstoff bereitzustellen, der im Nahinfrarot (NIR) Spektralbereich absorbiert und emittiert und der als Fluoreszenzstandard möglichst für eine Vielzahl der vorstehend beschriebenen Kalibrierungszwecke geeignet ist. Die Verbindung sollte möglichst glatte und unstrukturierte sowie breite Absorptionsbanden und insbesondere möglichst glatte und unstrukturierte sowie breite Emissionsbanden geringer Steilheit aufweisen bei einer möglichst geringen Überlappung der Absorptions- und Fluoreszenzbanden und einer möglichst hohen Fluoreszenzquantenausbeute (vorzugsweise φ_{f} ≥ 20%). Die Verbindung sollte idealerweise eine moderate Emissionsanisotropie r in einem polaren protischen Lösungsmittel wie Ethanol zeigen (vorzugsweise r ca. 0,15-0,20) und in den applikationsrelevanten Matrices eine ausreichende photochemische und thermische Stabilität besitzen. Des Weiteren sollten die genannten Eigenschaften möglichst sowohl in Lösung als auch in festen Matrices bestehen sowie in polarer aprotischer, in polarer protischer als auch in unpolarer Umgebung.

Diese Anforderungen werden gelöst durch die Verwendung einer (asymmetrisch substituierten) Verbindung nach der allgemeinen Formel (I) als NIR-Fluoreszenzstandard, 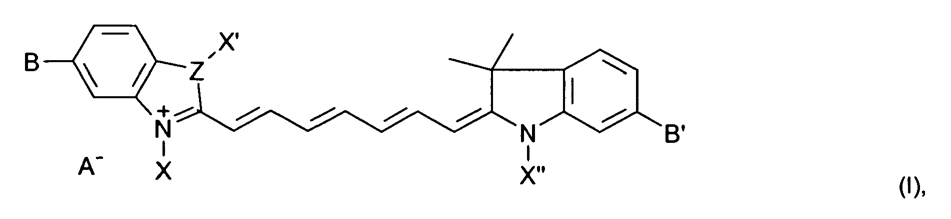 worin B und B' unabhängig voneinander einen Wasserstoff-, Methyl-, Ethyl-, Phenyl-, Naphthyl-, Benzoxazol-, Benzimidazol-, Benzthiazol- oder Indolrest bedeuten; X, X' und X" unabhängig voneinander einen Methyl-, Ethyl- oder Phenylrest bedeuten; Z ein Stickstoff- oder Kohlenstoffatom und A- ein beliebiges Anion bedeutet. Dabei können ein oder mehrere Wasserstoffreste der Formel (I) sowie der besagten Reste substituiert sein. Geeignete Substituenten hierfür sind solche, die einen möglichst geringen Effekt auf die Elektronendichteverteilung des konjugierten Systems aufweisen, beispielsweise kurze Alkylreste, insbesondere Methyl-, Ethyl-, Propyl-, oder Isopropylreste; Alkoxyreste, insbesondere Methoxy- oder Ethoxyreste; sowie Substituenten, die durch eine verzweigte oder unverzweigte Alkylkette, insbesondere eine Methyl-, Ethyl-, Propyl-, oder Isopropylkette, elektronisch von dem konjugierten Elektronensystem entkoppelt sind, wie z.B. Sulfonsäure- oder Carboxylgruppen, Halogenatome, insbesondere Chlor, Methoxy- oder Ethoxyreste, NHS-, Aldehyd-, Thiol-, und Aminogruppen.

Als Anion A kommen beliebige negativ geladene Gegenionen in Frage, beispielsweise Halogenide, Nitrat, Nitrid, Sulfat, Sulfit, Phosphat, Chlorat (ClO₃), Perchlorat (ClO₄⁻), Tetrafluoroborat (BF₄⁻), Triflat (CF₃SO₃⁻) etc.

Die Asymmetrie der erfindungsgemäßen Verbindung nach Formel (I) wird vorteilhaft dadurch erhöht, dass die Reste B und B' einerseits und/oder X und X" andererseits unterschiedlich gewählt sind. Diese Asymmetrie und der dadurch induzierte Charge-Transfer-Charakter ist Voraussetzung für die günstigen Absorptions- und Fluoreszenzeigenschaften dieser Verbindungen.

Insbesondere bevorzugt ist, dass in Formel (I) die Reste B oder B' einen Wasserstoff- oder Benzoxazolrest bedeuten, vorzugsweise B einen Benzoxazolrest und B' einen Wasserstoffrest. Ferner ist bevorzugt, dass die Reste X, X' und X" jeweils einen Ethyl- oder Phenylrest bedeuten, insbesondere X einen Ethylrest und X' und X" jeweils einen Phenylrest.

Gemäß einer weiteren bevorzugten Ausgestaltung der Erfindung bedeutet in Formel (I) Z ein Stickstoffheteroatom.

Besonders vorteilhafte spektrale Charakteristika zeigt die Verbindung gemäß Formel (II)

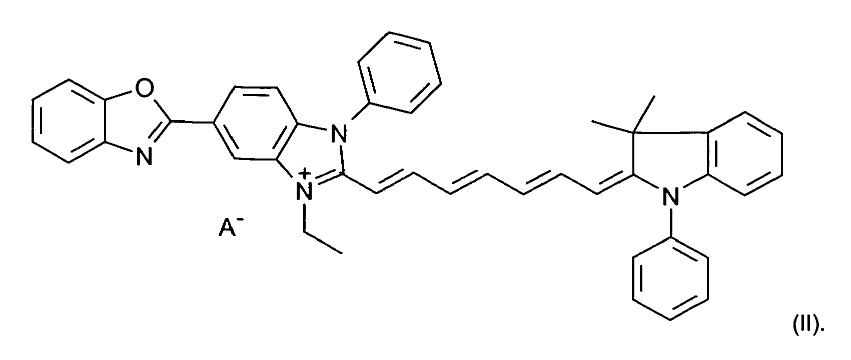

Die erfindungsgemäße Verbindung gemäß Formel (I), deren Fluoreszenzeigenschaften vorliegend erstmalig untersucht wurden, zeichnet sich durch Absorptions- und Emissionsspektren des Farbstoffs im Nahinfrarotbereich aus, die für NIR-Fluorophore ungewöhnlich breit, glatt und unstrukturiert sind. Dies gilt in besonderem Maße für die Emissionsspektren. Dies gilt überraschenderweise sowohl in polarer als auch in relativ unpolarer Umgebung sowie in Lösungen oder in festen Matrices. Dabei weist der Farbstoff eine für einen NIR-Fluorophor relativ geringe spektrale Überlappung zwischen Absorptions- und Emissionsbande auf, wodurch Reabsoptionseffekte stark minimiert werden. Demgegenüber zeigen strukturverwandte symmetrische Verbindungen strukturierte Absorptions- und Emissionsbanden und eine große Überlappung zwischen Absorption und Emission und sind damit für die hier vorgesehenen Applikationen als Fluoreszenzstandards ungeeignet. Des Weiteren ist der erfindungsgemäße Farbstoff durch eine vergleichsweise hohe Fluoreszenzquantenausbeute in polaren Lösungsmitteln als auch in festen Matrices gekennzeichnet. Bemerkenswert ist ferner die vergleichsweise hohe Stabilität des Farbstoffs in luftgesättigter Lösung und in festen Matrices.

Diese attraktiven spektroskopischen Eigenschaften bilden die Grundlage für die erfindungsgemäße Verwendung des Farbstoffs für verschiedene nachfolgend dargestellte Applikationen als Standard. Dabei wird vorliegend unter dem Begriff "Standard" oder "Fluoreszenzstandard" jeglicher referenzieller Einsatz eines fluoreszierenden Mediums verstanden, ungeachtet dessen, ob gerätespezifische Beiträge oder der Linearitätsbereich eines Detektorsystems des Photolumineszenzmesssystems ermittelt werden sollen oder eine Aussage über die quantitative Fluoreszenzintensität oder Streuintensität einer Probe oder das Vorhandensein einer fluoreszierenden Quelle getroffen werden soll oder dergleichen.

Gemäß einer besonders vorteilhaften Ausgestaltung der Erfindung wird die Verbindung nach Formel (I) als spektraler Fluoreszenzstandard zur Ermittlung einer Emissions- und/oder Anregungskorrekturfunktion eingesetzt wird, welche gerätespezifische spektrale Beiträge eines zu kalibrierenden Lumineszenzmesssystems enthält. Bezüglich dieser Verwendung wird auf die im Abschnitt *"Anregungs- und Emissionsstandards"* gemachten Ausführungen verwiesen. Die für einen NIR-Fluorophor ungewöhnlichen spektralen Eigenschaften des neuen Farbstoffs ermöglichen die Bestimmung der Emissionskorrektur für den Spektralbereich von ca. 650 bis 950 nm und die Bestimmung der Anregungskorrektur für den Spektralbereich von ca. 450 bis 780 nm. Dazu kann der Quotient aus dem korrigierten (geräteunabhängigen) Fluoreszenzspektrum des Farbstoffs und dem gerätespezifischen Farbstoffrohspektrum bestimmt werden, der z.B. mit konventionellen Fluoreszenzspektrometern (beispielsweise 0°/90°-Messgeometrie für die konventionelle Fluorometrie, 45°/0°-Messgeometrie für die bispektrale Fluoreszenz), Mikrofluorometern und spektral aufgelöst messenden Fluoreszenzmikroskopen (wide field Mikroskope und konfokale Laser Scanning Mikroskope (CLSM) oder anderen lmaging-Systemen) gemessen werden kann. Die Anregung des Fluoreszenzstandards kann in Lösung oder in festen Matrices mit üblichen rot emittierenden Lasern erfolgen. Vorzugsweise wird auch eine statistische, wellenlängenabhängige Unsicherheit (Messunsicherheitsbilanz) für die Kalibrierung eines Lumineszenzmesssystems in diesem Spektralbereich erstellt, sofern der Beitrag der gerätespezifischen Messunsicherheit für das zu kalibrierende Lumineszenzmesssystem über Wiederholmessungen und die Ermittlung der Standardabweichung für diese Messungen vom Anwender berücksichtigt wird.

Nach einer weiteren vorteilhaften Ausgestaltung der Erfindung wird die Verbindung nach Formel (I) als spektraler Fluoreszenzstandard in Kombination mit weiteren aufeinander abgestimmten spektralen Fluoreszenzstandards eingesetzt wird, deren Fluoreszenzspektren zusammen einen vorbestimmten Spektralbereich abdecken. Auf diese Weise kann eine rückführbare Kalibrierung des gesamten UV/vis/NIR-Spektralbereichs eines Lumineszenzmesssystems erfolgen, indem die mit den einzelnen Fluoreszenzstandards ermittelten Einzelkorrekturkurven miteinander verknüpft werden, wie vorausgehend im Abschnitt *"Anregungs- und Emissionsstandards" beschrieben.* Idealerweise sollten die Schnittpunkte benachbarter Spektren ausreichend hohe Fluoreszenzintensitäten aufweisen, um so die Verknüpfung der Einzelkorrekturkurven zu einer Gesamtkorrekturfunktion mit möglichst geringer Messunsicherheit zu gewährleisten. Details zu einer bevorzugten rechnerischen Vorgehensweise der Spektrenverknüpfung sowie vorteilhafte Kombinationen der Farbstoffe sind in DE 10 2004 044 717 A beschrieben.

Gemäß einer weiteren Ausgestaltung wird die Verbindung nach Formel (I) als NIR-Fluoreszenzquantenausbeutestandard zur Ermittlung der Fluoreszenzquantenausbeute einer Probe eingesetzt. Dabei ist die Fluoreszenzquantenausbeute definiert als das Verhältnis der von einer Probe emittierten Anzahl von Photonen zu der von der Probe absorbierten Photonenanzahl. Auch hier wird auf die Ausführungen im vorstehenden Abschnitt *"Fluoreszenzquantenausbeutestandards"* verwiesen. Insbesondere wird zur Ermittlung der Fluoreszenzquantenausbeute einer Probe die spektrale Strahldichte bzw. Emissionsintensität der Verbindung gemäß Formel (I) als Referenz mit bekannter Fluoreszenzquantenausbeute gemessen und mit der der Probe direkt verglichen. Die besondere Eignung der vorliegenden Verbindung für diese Verwendung resultiert aus ihrer relativ hohen Fluoreszenzquantenausbeute (> 20% in Ethanol), sowie der vergleichsweise geringen spektralen Überlappung der Absorptions- und Emissionsbande. Demgegenüber weisen bekannte NIR-Fluorophore deutlich geringere Fluoreszenzquantenausbeute von unter 10 % auf.

Weiterhin kann die Verbindung nach Formel (I) mit Vorteil als spektraler Standard zur Überprüfung der spektralen Geräteperformance und/oder der Langzeitstabilität der spektralen Gerätecharakteristika eines Lumineszenzmesssystems für den NIR-Spektralbereich eingesetzt werden sowie zur regelmäßigen Überprüfung der spektralen Sensitivität (s. Abschnitt *"Standards zur Überprüfung der spektralen Geräteperformance, der Langzeitstabilität der spektralen Gerätecharakteristika und der spektralen Sensitivität"*)*.* Die regelmäßige Überprüfung der Performance eines Lumineszenzmesssystems ist notwendig, um beispielsweise den durch die Alterung von optischen und optisch-elektronischen Bauteilen bedingten Gerätedrift zu erfassen und eine Vergleichbarkeit der an verschiedenen Tagen durchgeführten Messungen von relativen Fluoreszenzintensitäten zu ermöglichen. Die Verfügbarkeit solcher Standards ist außerdem unerlässlich für die im Rahmen von Laborakkreditierungen nach ISO 17025 notwendige regelmäßige Durchführung von Geräteüberprüfungen.

Eine weitere im Rahmen der vorliegenden Erfindung liegende Ausgestaltung betrifft die Verwendung der Verbindung nach Formel (I) als Standard zur Ermittlung und Überprüfung des Linearitätsbereichs eines Lumineszenzdetektionssystems (s. vorstehenden Abschnitt *"Standards zur Bestimmung des Linearitätsbereichs von Lumineszenzdetektionssystemen"*). Dabei wird der Bereich eines Detektors bestimmt, in dem die von diesem angezeigte Intensität linear mit der eingestrahlten Intensität zunimmt, also der Bereich, in welchem eine zuverlässige quantitative Aussage über eine Konzentration eines Chromophors in einer Probe möglich ist. Voraussetzung dafür, dass die Emissionsspektren bei Extinktionen bis ca. 0,1 in einer 1-cm-Küvette noch konzentrationsunabhängig sind, ist wiederum eine möglichst geringe spektrale Überlappung der Absorptions- und Fluoreszenzbande. Zudem sind auch hier glatte, unstrukturierte Emissionsspektren, die einen möglichst großen Emissionspektralbereich abdecken, sowie eine hohe Quantenausbeute von Vorteil. Sämtliche Kriterien werden von der Verbindung nach Formel (I) erfüllt. Er ist daher zur Bestimmung der Linearität von Fluoreszenzmesssystemen im Bereich des diagnostischen NIR-Fensters geeignet.

Gemäß einer weiteren bevorzugten Anwendung wird die Verbindung nach Formel (I) in einer flüssigen oder festen lichtstreuenden Matrix als streuender spektraler Standard und als streuender Quantenausbeutestandard eingesetzt (s. Abschnitt *"Streuende spektrale Fluoreszenzstandards und Fluoreszenzstandards zur Bestimmung der Fluoreszenzquantenausbeute von streuenden und fluoreszierenden Systemen bzw. zur Überprüfung von dafür eingesetzten Messverfahren und -aufbauten"*). Als Matrix wird eine streuende Flüssigkeit, insbesondere eine Dispersion oder Emulsion, oder eine streuende feste Matrix, insbesondere eine Polymermatrix, verwendet. Die eigentlichen Streuer sind beispielsweise Mikropartikel aus SiO₂, PMMA oder Polystyrol, die in die feste Matrix eingebracht oder in der Flüssigkeit dispergiert werden. Grundsätzlich kommen sowohl für die Matrix als auch für die Streuer alle bekannten und geeigneten Systeme in Frage. Ein großer Vorteil des erfindungsgemäß eingesetzten NIR-Farbstoffes für die Anwendung als "streuender spektraler Fluoreszenzstandard und Fluoreszenzquantenausbeutestandard" sind wiederum die glatten, breiten und unstrukturierten Absorptions- und Emissionsbanden und der gegenüber bekannten Systemen deutlich geringere Spektralbereich der Überlappung von Absorption und Emission. Die in Matrices unterschiedlicher Polarität durchgeführten Untersuchungen zeigen zudem, dass der Fluorophor gemäß Formel (I) nicht nur in polarer Umgebung, wie Ethanol, sondern auch in relativ unpolaren Matrices, wie PMMA oder PS seine glatten, breiten und unstrukturierten Absorptions- und Emissionsbanden beibehält. Außerdem sind die bislang erhaltenen Fluoreszenzquantenausbeuten in allen Fällen ausreichend für eine Applikation als Fluoreszenzstandard auch in solchen streuenden Systemen.

Es ist ferner bevorzugt vorgesehen, die Verbindung nach Formel (I) als Oberflächenmarkierung oder eingekapselte Dotierung von Partikeln mit Partikeldurchmessern im Bereich von Nanometern bis Mikrometern einzusetzen, d.h. zwischen ca. 10 nm und 1000 µm. Als Matrixmaterial für die Partikel kommen insbesondere organische Polymere, wie Polystyrole oder Polymethylmethacrylate, Polyacrylamide, Polylactide, Polyisopren, Polyacrylnitril und Polyester in Frage sowie anorganische Polymere wie Silica, Silikone und Sol-Gel-Netzwerke und anorganisch-organische Hybridsysteme. Neben massiven Partikeln können auch partikuläre Hohlkörper, sogenannte "hollow spheres" Einsatz finden. Dabei erfolgt, wie im Abschnitt *"Fluorophor-dotierte Partikel im Nano- und Mikrometerbereich"* diskutiert, die Einkapselung des Fluorophors je nach Polymermaterial und Fluorophor entweder durch Quellung oder Einpolymerisation. Oberflächen-Dotierungen hingegen können durch Anbindung des Fluorophors an Oberflächenfunktionalitäten der Partikel hergestellt werden. Während die Einkapselung des Fluorophor den Vorteil seines Schutzes vor äußeren Einflüssen aufweist, werden die optischen Eigenschaften der Fluorophore im Fall der Oberflächen-Dotierung nicht von der Polymermatrix bestimmt, sondern system- bzw. anwendungsspezifisch von der jeweiligen Mikroumgebung des Farbstoffs. Im Falle des eingekapselten Fluorophors gereicht wiederum zum Vorteil, dass seine Fluoreszenzeigenschaften und insbesondere die vorteilhafte Form der Emissionsbande nur wenig von der Polarität der Matrix beeinflusst werden und seine glatten, breiten und unstrukturierten Absorptions- und Emissionsbanden erstaunlicherweise auch in relativ unpolaren Matrices wie PS beibehalten werden.

Eine weitere erfindungsgemäße Anwendung der Verbindung gemäß Formel (I) stellt ihre Verwendung als (molekularer oder partikulärer) Fluoreszenzmarker dar (siehe vorstehenden Abschnitt *"Fluoreszenzmarker"*). In diesem Zusammenhang kann die entsprechend funktionalisierte oder in funktionalisierten Systemen wie Partikeln gekapselte Verbindung z.B. zur Markierung und zum fluorometrischen Nachweis funktioneller Gruppen (z.B. auf Oberflächen, an (Bio)Makromolekülen) und von nicht oder nur im UV-Bereich fluoreszierenden Analyten, insbesondere (Bio)Makromolekülen eingesetzt werden. Dabei kann der erfindungsgemäße Fluoreszenzfarbstoff insbesondere auch in Form eines modular aufgebauten Sensormoleküls Einsatz finden, für den Nachweis von Analyten wie z.B. Metallionen, Anionen, und Biomolekülen, wobei er kovalent oder nicht-kovalent an einem weiteren Molekül, beispielsweise einem targetspezifischen Liganden, gebunden vorliegt. Wahlweise kann der Farbstoff auch in Form eines partikulären Labels eingesetzt werden, wobei er in nano- oder mikrometergroße organische oder anorganische funktionalisierte oder funktionalisierbare Partikel eingebaut (gekapselt) oder an die Oberflächen solcher Partikel gebunden vorliegt. Die Partikel können dann weiter funktionalisiert sein, z.B. entweder mit targetspezifischen Liganden bzw. Oberflächenfunktionalitäten oder mit chemischen Gruppen für die kovalente Anbindung an Analyte. Die Eignung der Verbindung gemäß Formel (I) als Fluoreszenzmarker ergibt sich wiederum aus ihren im Gegensatz zu den bekannten Verbindungen vergleichsweise breiten, unstrukturierten Absorptions- und Emissionsbanden, ihren geringen spektralen Überlappungsbereich von Absorption und Fluoreszenz in Kombination mit ihrer vergleichsweise hohen Fluoreszenzquantenausbeute in vielen verschiedenen Matrices unterschiedlicher Polarität. Darüber hinaus ist auch in diesem Zusammenhang ihre große photochemische und thermische Stabilität von Vorteil.

Eine weitere im Rahmen der vorliegenden Erfindung liegende Anwendung der erfindungsgemäßen Verbindung betrifft ihre Verwendung als integral auslesbaren Fluoreszenzintensitätsstandard. Die Eignung des NIR-Farbstoffs hierzu resultiert wiederum aus seiner vergleichsweise großen spektralen Trennung von Absorption und Fluoreszenz (vergleichsweise großer Stokes-Shift). Diese Anwendung dient zur Referenzierung der Intensität (in der Regel durch Quotientenbildung) von kürzer wellig emittierenden Fluoreszenzfarbstoffen. Letztere können z.B. Bestandteil eines analytsensitiven Sensorsystems oder Fluoreszenzassays sein. Dabei wird der Quotient aus analytsensitivem Signal zum analytinsensitiven Standardsignal gebildet, um so beispielsweise Signalschwankungen zu erfassen, die auf Fluktuationen der Anregungslichtintensität zurückzuführen sind. Voraussetzung dafür ist, dass das analytsensitive System und der Standard bei derselben Anregungswellenlänge angeregt werden können, spektral aber deutlich getrennte Emissionsbereiche aufweisen. In diesem Fall kann der NIR-Farbstoff außerdem als Geräte- und/oder Kalibrierstandard für das zum Auslesen des Signals des integral messenden Fluoreszenzmesssystems verwendet werden, d.h. als so genannter "Day-to-Day-Intensitätsstandard". Geräte, die hiermit überprüft werden können, sind beispielsweise Fluoreszenzmesssysteme, die einen Anregungskanal und zwei oder mehrere integral detektierende Emissionskanäle aufweisen. Im Gegensatz zur Applikation als spektraler Fluoreszenzstandard stellt die Applikation als Intensitätsstandard für integral messende Fluoreszenzmesssysteme keine besonderen Anforderungen an die spektrale Form der Emissionsbande. Hier ist insbesondere eine hohe Stabilität wichtig und die Anpassung an den Spektralbereich des analytsensitiven Systems.

Sämtliche der vorstehenden Kalibrierungsanwendungen können für konventionelle (spektral aufgelöst oder integral messende) Fluoreszenzspektrometer (Fluorometer) beliebiger Messgeometrie (beispielsweise 0°/90°-Messgeometrie für die konventionelle Fluorometrie, 45°/0°-Messgeometrie für die bispektrale Fluoreszenz), Mikrofluorometer sowie spektral aufgelöst messende Fluoreszenzmikroskope (etwa Wide-Field-Mikroskope und konfokale Laser-Scanning-Mikroskope (CLSM) oder andere Imaging-Systeme) sowie für Ramanspektrometer Einsatz finden. Darüber hinaus eignet sich der NIR-Fluorophor gemäß Formel (I) als Standard für optische bildgebende Geräte (Imaging-Geräte), für integral messende konfokale und wide-field-Mikroskope, insbesondere für In-vivo-Fluorescence-Imaging verwendete Fluoreszenzgeräte, und für faseroptische Fluoreszenzsensoren etc.

Aufgrund der für einen NIR-Fluorophor relativ geringen Überlappung der Absorptions- und Fluoreszenzspektren und der von der Polarität der Matrix nur gering beeinflussten Spektrenform kann dieser neue NIR-Standard für alle Typen von Messsystemen, die für Photolumineszenzmessungen an Lösungen, an festen Systemen und an Partikeln ausgelegt sind, sowie für verschiedene Formate, beispielsweise Küvetten, Mikrotiterplatten, Slides und Filme, und für verschiedene Messgeometrien (z.B. 0°/90°-Messgeometrie und 45°/0°-Messgeometrie) eingesetzt werden.

Ein weiterer Aspekt der vorliegenden Erfindung betrifft einen Kit zur rückführbaren Kalibrierung eines Photolumineszenzmesssystems, insbesondere eines Fluoreszenzmesssystems, umfassend einen Fluoreszenzstandard gemäß Formel (I), insbesondere gemäß Formel (II), sowie sein spektral korrigiertes Fluoreszenzspektrum in tabellarischer Form (relative oder normierte Fluoreszenzintensität als Funktion der Wellenlänge), in computerlesbarer Form und/oder eine Angabe einer Internetseite, auf welcher das korrigierte Fluoreszenzspektrum abrufbar ist. Dabei wird im Rahmen der vorliegenden Erfindung unter dem Begriff korrigiertes Fluoreszenzspektrum ein Emissions- oder Anregungsspektrum verstanden, das in einem rückführbar kalibrierten Lumineszenzmesssystem unter definierten Messbedingungen erhalten wurde. Durch Korrektur der gerätespezifischen Beiträge des kalibrierten Messsystems ist das korrigierte Fluoreszenzspektrum geräteunabhängig. Vorzugsweise handelt es sich um ein von einer autorisierten Behörde zertifiziertes Spektrum.

Optional kann das Kit eine Mehrzahl weiterer Fluoreszenzstandards umfassen sowie spektral korrigierte Fluoreszenzspektren von diesen in tabellarischer Form, in computerlesbarer Form und/oder eine Angabe einer Internetseite, auf welcher die korrigierten Fluoreszenzspektren abrufbar sind, wobei die Fluoreszenzstandards derart spektral aufeinander abgestimmt sind, dass ihre spektral korrigierten Fluoreszenzspektren zusammen einen vorgegebenen Spektralbereich abdecken. Ein solches Kit kann grundsätzlich eine Mehrzahl unterschiedlicher Emissionsstandards und deren spektral korrigierte Emissionsspektren zur Erstellung einer Gesamtkorrekturfunktion für den Emissionskanal (Emissionskorrekturfunktion) enthalten als auch eine Mehrzahl unterschiedlicher Anregungsstandards und deren korrigierte Anregungsspektren zur Erstellung einer Gesamtkorrekturfunktion für den Anregungskanal (Anregungskorrekturfunktion) umfassen. Bevorzugt umfasst das Kit sowohl Emissions- als auch Anregungsstandards, sowie deren spektral korrigierte Emissions- und Anregungsspektren in elektronischer Form auf einem Datenträger bzw. über das Internet abrufbar. Die Verbindung gemäß Formel (I) kann sowohl als Emissionsstandard als auch als Anregungsstandard eingesetzt werden. Nach einer bevorzugten Ausgestaltung der Erfindung umfasst das Kit ferner einen Programmalgorithmus zur Berechnung von Teilkorrekturfunktionen und/oder eine Angabe einer Internetseite, auf welcher der Algorithmus abrufbar ist. Es ist ferner bevorzugt vorgesehen, dass das Kit zu jedem korrigierten Fluoreszenzspektrum einen geräteunabhängigen spektralen Messunsicherheitsverlauf in computerlesbarer Form umfasst. Auch hier ist optional oder zusätzlich möglich, die Angabe einer Internetseite bereitzustellen, auf welcher die Messdaten zusammen mit den spektralen Messunsicherheitsverläufen abrufbar sind. Letztere ermöglichen die Erstellung eines Gesamtmessunsicherheitsverlaufs für die Gesamtkorrekturfunktion, wodurch eine wellenlängenabhängige Messunsicherheitsbilanz für das zu kalibrierende Lumineszenzmesssystem bestimmt werden kann. Das Kit kann ferner eine Anweisung zum bestimmungsgemäßen Gebrauch der Kitkomponenten und/oder eine Angabe einer Internetseite, auf welcher die Anweisungen abrufbar sind, enthalten. Die Anweisung enthält beispielsweise Angaben zu den Messbedingungen und Geräteeinstellungen und dergleichen. Der erfindungsgemäße NIR-Farbstoff sowie das diesen enthaltende Kit versetzt einen Benutzer in die Lage, eine Kalibrierung des Messsystems im NIR-Spektralbereich durchzuführen. Im Falle eines Kits, das eine Kombination des erfindungsgemäßen NIR-Farbstoffs mit weiteren abgestimmten Standards enthält, kann eine Emissionskorrektur über den gesamten UV/vis/NIR-Spektralbereich bis zur einer Wellenlänge von etwa 900 nm und eine Anregungskorrektur bis etwa 700 nm zuverlässig und reproduzierbar durchgeführt werden. Gegenüber bekannten Kombinationen wird somit der kalibrierbare Wellenlängenbereich in Richtung des NIR-Bereichs erweitert. Insbesondere ermöglicht die Abstimmung der einzelnen Fluoreszenzstandards die Erzeugung einer Gesamtkorrekturfunktion für das Gerät in bislang nicht verfügbarer Qualität.

Weitere vorteilhafte Ausgestaltungen der Erfindung sind Gegenstand der übrigen Unteransprüche.

Die Erfindung wird nachfolgend in einem Ausführungsbeispiel anhand der Abbildungen näher erläutert. Es zeigen:
- Figur 1:: normiertes und korrigiertes Absorptions- und Emissionsspektrum der Verbin- dung gemäß Formel (II) in Ethanol;
- Figur 2:: normiertes und korrigiertes Absorptions- und Emissionsspektrum der Verbindung gemäß Formel (II) in Polystyrol;
- Figur 3:: normierte und korrigierte Absorptions- und Emissionsspektren eines Sets von Fluoreszenzstandards enthaltend die Verbindung gemäß Formel (II),und
- Figur 4:: normiertes und korrigiertes Absorptions- und Emissionsspektrum der Verbin- dung gemäß Formel (II) in unterschiedlichen Lösungsmitteln verschiedener Polarität und Protizität.

Eine Lösung der Verbindung gemäß Formel (IIa) mit Perchlorat (ClO₄⁻) als Anion A⁻(OTAVA Ltd.) in Ethanol wurde fluoreszenzspektrometrisch vermessen.

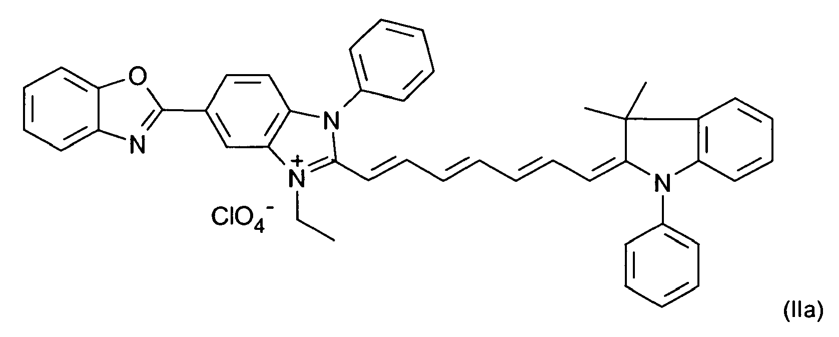

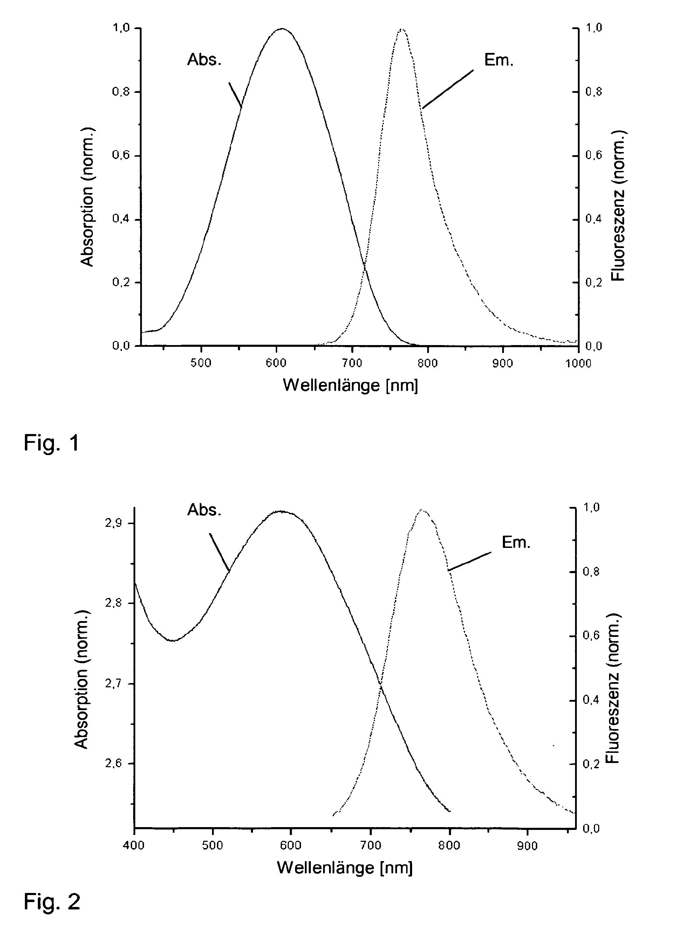

Figur 1 zeigt das normierte und korrigierte Absorptionsspektrum (links) und das normierte und korrigierte Emissionsspektrum (rechts) des neuen NIR-Farbstoffs in ethanolischer Lösung bei einer Anregungswellenlänge bei 590 nm. Es ist erkennbar, dass die Verbindung in dem polaren Lösungsmittel (Ethanol) für einen NIR-Farbstoff ungewöhnlich breite glatte und unstrukturierte Banden sowie eine geringe spektrale Überschneidung der Absorptions- und Emissionsbanden aufweist.

Es wurden ferner Polymerpartikel mit Polystyrol (PS) als Polymermatrix mit der Verbindung gemäß Formel (IIa) mit Perchlorat (ClO₄⁻) als Anion A⁻ beladen und ebenfalls fluoreszenzspektrometrisch vermessen. Figur 2 zeigt das normierte und korrigierte Emissionsspektrum (rechts) des neuen NIR-Farbstoffs in den PS-Partikeln bei Anregung im langwelligsten Absorptionsmaximum. Es ist überraschend, dass die in polarer Umgebung (Figur 1) beobachteten breiten, glatten und unstrukturierten Banden sowie die geringe spektrale Überschneidung der Absorptions- und Emissionsbanden auch in der relativ unpolaren Matrix erhalten bleiben. Überraschend ist auch die vergleichsweise hohe Fluoreszenzquantenausbeute von beispielsweise ≥ 22% in Ethanol.

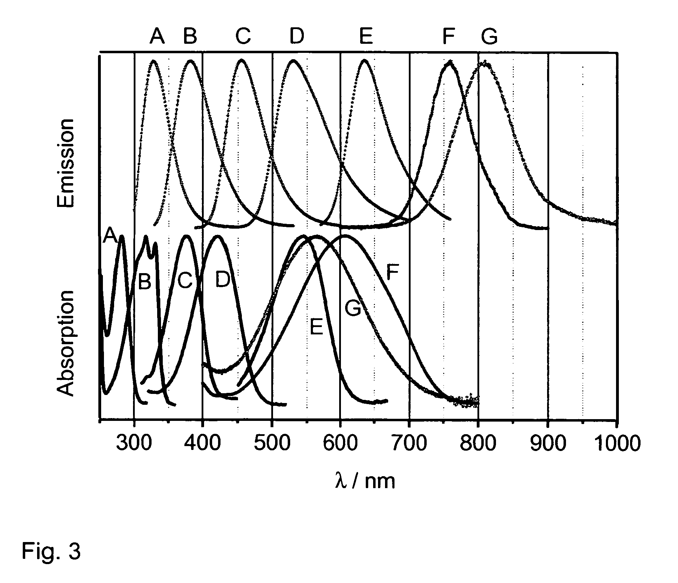

Für die Kalibrierung des gesamten UV/vis/NIR-Spektralbereichs eines Lumineszenzmesssystems zur Ermittlung seiner Emissions- und/oder Anregungskorrekturfunktion, welche gerätespezifische spektrale Beiträge des Lumineszenzmesssystems enthalten, müssen eine Mehrzahl von Fluoreszenzstandards miteinander kombiniert werden, deren Emissions- bzw. Absorptionsbanden sich spektral ergänzen. Als Beispiel wurde ein Set von sieben Fluoreszenzstandards (Emissionsstandards) A bis G untersucht, das ein Biphenylderivat (A), ein Naphthalinderivat (B), zwei Coumarinderivate (C und D), ein Oxazinderivat (E), ein Styrylderivat (G) sowie die Verbindung gemäß Formel (IIa) (F) umfasste. Figur 3 zeigt die spektral korrigierten und normierten Emissionsspektren der Standards A bis G (oben) sowie die korrigierten und normierten Anregungsspektren der Standards (unten). Die Verbindungen A-F und wurden als Lösung in Ethanol und Verbindung G in Acetonitril vermessen. Es ist erkennbar, dass sämtliche Standardemissionsspektren einen breiten und unstrukturierten Bandenverlauf mit nur jeweils einem Maximum und keinen Schultern oder Unstetigkeiten in dem, für die Kalibrierung verwendeten Spektralbereich aufweisen. Ferner wurde bei der Auswahl der Fluoreszenzfarbstoffe Wert auf möglichst große Wellenlängenabstände zwischen den Maxima der Emissionsspektren und denen der dazugehörigen Absorptionsspektren gelegt (Stokes-Shift), um die nochmalige Absorption einmal emittierter Photonen aufgrund der Überlappung von Absorptions- und Emissionsbanden zu vermeiden. Wichtig ist ferner, dass die Standards so gewählt sind, dass die Einzelspektren an den Überschneidungspunkten eine ausreichende Intensität aufweisen, damit auch in diesen Bereichen eine möglichst geringe Unsicherheit bei der Korrektur des Messsystems entsteht. Vorzugsweise werden zur Kalibrierung des Lumineszenzmesssystems Teilkorrekturfunktionen durch Quotientenbildung aus den (unkorrigierten) gemessenen Fluoreszenzspektren der Standards und den entsprechenden korrigierten Fluoreszenzspektren der Standards gebildet und zu einer Gesamtkorrekturfunktion rechnerisch beispielsweise gemäß dem in DE 10 2004 044 717 A1 beschriebenen Verfahren verknüpft, welche die gerätespezifischen spektralen Beiträge enthält. Diese Gesamtkorrekturfunktion erlaubt die spektrale Korrektur eines breiten Spektralbereichs des Messsystems.

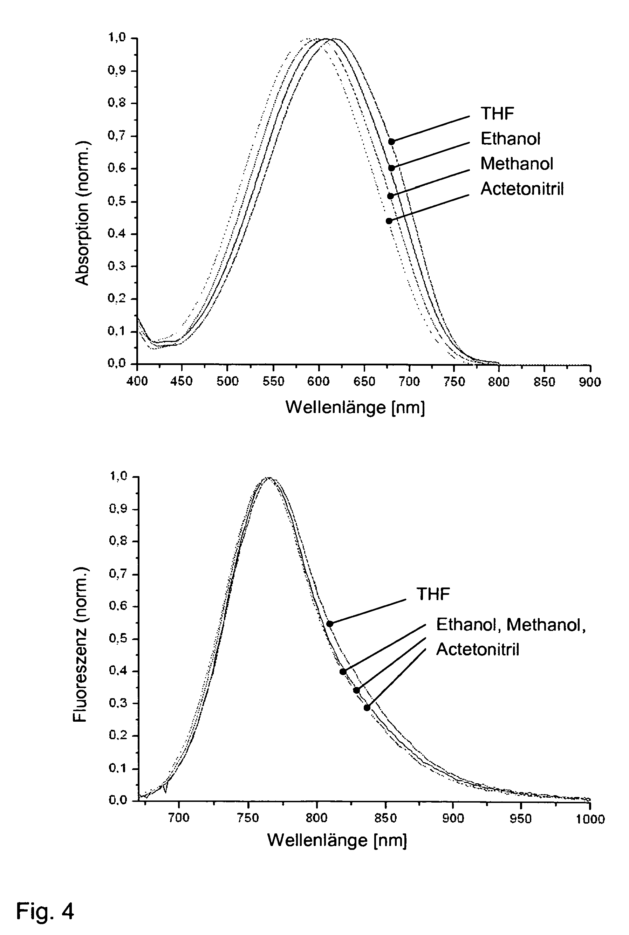

Der erfindungsgemäße NIR-Farbstoff weist glatte und unstrukturierte Absorptions- und Emissionsspektren in unterschiedlichen Lösungsmitteln verschiedener Polarität und Protizität auf, was aus Figur 4 hervorgeht, in der oben die normierten und korrigierten Absorptionsspektren und unten die entsprechend bearbeiteten Emissionsspektrum der Verbindung gemäß Formel (II) dargestellt sind. Im Einzelnen wurde der Farbstoff in Ethanol, Methanol, Acetonitril und Tetrahydrofuran gelöst und vermessen. Während die Absorptionsbande des Farbstoffs in der Reihenfolge Acetonitril → Methanol → Ethanol → THF eine leichte Verschiebung in Richtung längerer Wellenlängen zeigt (Fig. 4, oben), fallen die Fluoreszenzbanden in den unterschiedlichen Lösungsmitteln mit Ausnahme von THF praktisch zusammen (Fig. 4 unten). In Tabelle 1 sind die Wellenlängen der Bandenmaxima, die Extinktionskoeffizienten, die Stokes-Shifts sowie die relativen Quantenausbeuten (gemessen gegen Styryl 9M als Quantenausbeutestandard (Quantenausbeute = 0,07 gegen Rh101) in Methanol nach Anregung bei λₑₓ= 530 nm) zusammengestellt.

| **Lösungsmittel** | λ**_{abs,max} [nm]** | λ**_{em,max} [nm]** | **e** **[L*mol⁻¹*cm⁻¹**] | **Stokes Shift [cm⁻¹** | **Quantenausbeute** |
|---|---|---|---|---|---|
| Methanol | 597 | 764 | 59200 | 1 | 0,20 |
| Ethanol | 607 | 766 | 58200 | 3420 | 0,21 |
| Acetonitril | 587 | 762 | 56300 | 3912 | 0,24 |
| THF | 614 | 764 | 62700 | 3198 | 0,26 |

Der neue NIR-Farbstoff kann für die o.g. Standardapplikationen je nach Fluoreszenzmessmethode und Fluoreszenzmesssystem in nahezu beliebiger Form eingesetzt werden, beispielsweise in Lösung (z.B. in Küvetten, Mikroküvetten oder Mikrokanalstrukturen), in nanometer- oder mikrometergroßen Polymerpartikeln (Einbau z.B. durch Quellen oder Einpolymerisieren, Partikelmatrix z.B. PS; Einsatz z.B. in der Fluoreszenzmikroskopie), in Polymerblöcken oder -scheiben beliebiger Größe und Dicke (Einbau z.B. durch thermische oder photochemische Polymerisation im Falle von PMMA; Einsatz z.B. für die Fluorometrie, Mikrofluorometrie, Fluoreszenzmikroskopie und die optische Bildgebung) oder in Filmen bzw. Schichtsystemen (z.B. mittels Spin Coating erzeugte Filme auf Substraten wie Objektträgern aus Polymer oder Glas, Sol-Gel-Systeme oder (selbsttragende) Filme. Beispiele für Einsatzgebiete für letztere Systeme sind u.a. die Fluoreszenzmikroskopie und andere Imaging-Methoden, die bispektrale Fluoreszenz (Colorimetrie) und alle für Fluoreszenzuntersuchungen an Oberflächen geeigneten Messmethoden und die Fluoreszenzsensorik z.B. mit faseroptischen Systemen. Der neue NIR-Farbstoff kann für die Erzeugung von transparenten fluoreszierenden festen Systemen in feste Matrices direkt als molekulares System eingebracht werden oder für die Erzeugung von fluoreszierenden Systemen mit definierten, kontrollierbaren Streueigenschaften als molekulares System in Gegenwart von partikulären Systemen wie nanometer- oder mikrometergroßen organischen, anorganischen und organisch-anorganischen Polymerpartikeln oder als partikuläres System in Form von Farbstoff-dotierten nanometer- oder mikrometergroßen Polymerpartikeln. Die Fluoreszenz- und Streueigenschaften dieser Systeme können dabei kontrolliert und variiert werden über die Farbstoffkonzentration bzw. Farbstoffbeladungsdichte, die Partikelgröße sowie über den Brechungsindex des Partikelmaterials und den Brechungsindex der Matrix. Auch der Einsatz in Lösung bzw. Suspension in Gegenwart von streuenden nanometer- oder mikrometergroßen Partikeln zur Erzeugung einer definierten Streuung ist denkbar. Diese Applikationsbreite in Kombination mit den interessanten optischen Eigenschaften des neuen NIR-Farbstoffs ist Voraussetzung für die Generierung von neuen "streuenden" Fluoreszenzstandards (spektrale Fluoreszenzstandards; Fluoreszenzquantenausbeutestandards), also Systemen mit definierten Fluoreszenz- und Streueigenschaften, zur Überprüfung von Fluoreszenzmesssystemen, die für Untersuchungen an fluoreszierenden und streuenden Systemen eingesetzt werden.

## Patentansprüche

1. Verwendung einer Verbindung nach der allgemeinen Formel (I) als NIR-Fluoreszenzstandard 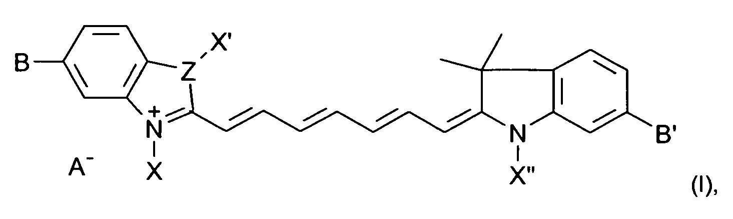 worin B und B' unabhängig voneinander einen Wasserstoff-, Methyl-, Ethyl-, Phenyl-, Naphthyl-, Benzoxazol-, Benzimidazol-, Benzthiazol- oder Indolrest bedeuten und B und B' unterschiedlich gewählt sind; X, X' und X" unabhängig voneinander einen Methyl-, Ethyl- oder Phenylrest bedeuten; Z ein Stickstoff- oder Kohlenstoffatom und A⁻ein Anion bedeutet, wobei ein oder mehrere Wasserstoffreste der Formel I sowie der besagten Reste substituiert sein können.

2. Verwendung nach Anspruch 1, wobei in Formel (I) X und X" unterschiedlich gewählt sind.

3. Verwendung nach Anspruch 1 oder 2, wobei in Formel (I) B oder B' einen Wasserstoff- oder Benzoxazolrest bedeuten, insbesondere B einen Benzoxazolrest und B' einen Wasserstoffrest.

4. Verwendung nach einem der vorhergehenden Ansprüche, wobei in Formel (I) X, X' und X" jeweils einen Ethyl- oder Phenylrest bedeuten, insbesondere X einen Ethylrest und X' und X" einen Phenylrest.

5. Verwendung nach einem der vorhergehenden Ansprüche, wobei in Formel (I) Z ein Stickstoffatom bedeutet.

6. Verwendung nach einem der vorhergehenden Ansprüche, wobei die Verbindung nach Formel (II) verwendet wird: 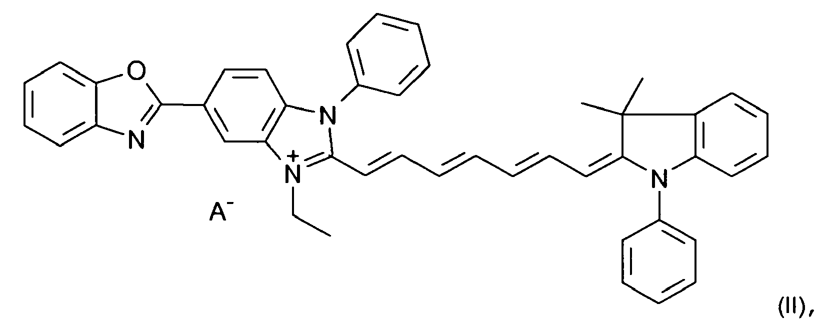 wobei das Anion A⁻ insbesondere ClO₄⁻ ist.

7. Verwendung nach einem der vorhergehenden Ansprüche, wobei die Verbindung nach Formel (I) als spektraler Fluoreszenzstandard zur Ermittlung einer Emissions- und/oder Anregungskorrekturfunktion eingesetzt wird, welche gerätespezifische spektrale Beiträge eines zu kalibrierenden Lumineszenzmesssystems enthält.

8. Verwendung nach Anspruch 7, wobei die Verbindung nach Formel (I) als spektraler Fluoreszenzstandard in Kombination mit weiteren aufeinander abgestimmten spektralen Fluoreszenzstandards eingesetzt wird, deren Fluoreszenzspektren zusammen einen vorbestimmten Spektralbereich abdecken.

9. Verwendung nach einem der vorhergehenden Ansprüche, wobei die Verbindung nach Formel (I) als Fluoreszenzquantenausbeutestandard eingesetzt wird.

10. Verwendung nach einem der vorhergehenden Ansprüche, wobei die Verbindung nach Formel (I) als Standard zur Überprüfung der spektralen Geräteperformance, der Langzeitstabilität der spektralen Gerätecharakteristika und der spektralen Sensitivität eines Photolumineszenzmesssystems eingesetzt wird.

11. Verwendung nach einem der vorhergehenden Ansprüche, wobei die Verbindung nach Formel (I) als Standard zur Ermittlung und Überprüfung des Linearitätsbereichs eines Lumineszenzdetektionssystems eingesetzt wird.

12. Verwendung nach einem der vorhergehenden Ansprüche, wobei die Verbindung nach Formel (I) in einer flüssigen oder festen lichtstreuenden Matrix als streuender spektraler Fluoreszenzstandard und als Fluoreszenzstandard zur Bestimmung der Fluoreszenzquantenausbeute von streuenden und fluoreszierenden Systemen bzw. zur Überprüfung von dafür eingesetzten Messverfahren und -aufbauten eingesetzt wird.

13. Verwendung nach einem der vorhergehenden Ansprüche, wobei die Verbindung nach Formel (I) als Oberflächenmarkierung oder eingekapselte Dotierung von Partikeln mit Partikeldurchmessern im Bereich von Nanometern bis Mikrometern eingesetzt wird.

14. Verwendung nach einem der vorhergehenden Ansprüche, wobei die Verbindung nach Formel (I) als molekularer oder partikulärer Fluoreszenzmarker eingesetzt wird.

15. Verwendung nach einem der vorhergehenden Ansprüche, wobei die Verbindung nach Formel (I) als integral auslesbarer Fluoreszenzintensitätsstandard eingesetzt wird.

16. Kit zur rückführbaren Kalibrierung eines Photolumineszenzmesssystems, insbesondere eines Fluoreszenzmesssystems, umfassend einen Fluoreszenzstandard gemäß Formel (I) nach einem der Ansprüche 1 bis 6 sowie ein spektral korrigiertes Fluoreszenzspektrum des Fluoreszenzstandards in tabellarischer Form, in computerlesbarer Form und/oder eine Angabe einer Internetseite, auf welcher das korrigierte Fluoreszenzspektrum abrufbar ist.

## Claims

1. Use of a compound according to general formula (1) as
an NIR fluorescence standard 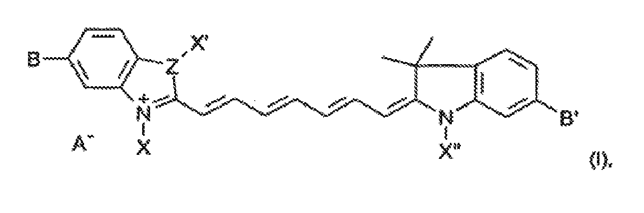 wherein B and B', independently of one another, denote a hydrogen, methyl, ethyl, phenyl, naphthyl, benzoxazole, benzimidazole, benzthiazole or indole radical, and B and B' are selected to be different; X, X' and X", independently of one another, denote a methyl, ethyl or phenyl radical; Z denotes a nitrogen atom or a carbon atom and A⁻ denotes an anion, wherein one or more hydrogen radicals of formula (I) as well as said radicals may be substituted.

2. The use according to Claim 1, wherein X and X" in formula (I) are selected to be different.

3. The use according to Claim 1 or 2, wherein B or B' in formula (I) denotes a hydrogen or benzoxazole radical, in particular B denotes a benzoxazole radical and B' denotes a hydrogen radical.

4. The use according to any one of the preceding claims, wherein X, X' and X" in formula (I) each denote an ethyl or phenyl radical, in particular X denotes an ethyl radical and X' and X" denote a phenyl radical.

5. The use according to any one of the preceding claims, wherein Z in formula (I) denotes a nitrogen atom.

6. The use according to any one of the preceding claims, wherein the compound according to formula (II) is used: 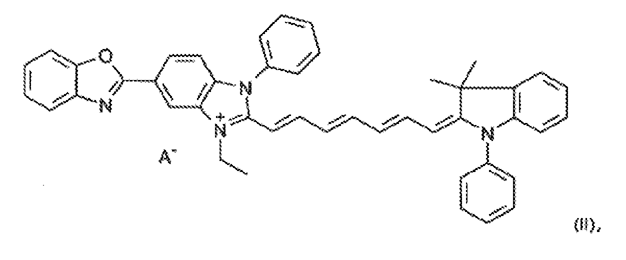 wherein the anion A⁻ is ClO₄⁻ in particular.

7. The use according to any one of the preceding claims, wherein the compound according to formula (I) is used as a spectral fluorescence standard for determining an emission and/or excitation correction function, which contains instrument-specific spectral contributions of a luminescence measurement system to be calibrated.

8. The use according to Claim 7, wherein the compound according to formula (I) is used as a spectral fluorescence standard in combination with other coordinated spectral fluorescence standards, whose fluorescence spectra together cover a predetermined spectral range.

9. The use according to any one of the preceding claims, wherein the compound according to formula (I) is used as a fluorescence quantum yield standard.

10. The use according to any one of the preceding claims, wherein the compound according to formula (I) is used as a standard for testing the spectral instrument performance, the long-term stability of the spectral instrument characteristics and the spectral sensitivity of a photoluminescence measurement system.

11. The use according to any one of the preceding claims, wherein the compound according to formula (I) is used as the standard for determining and testing the linearity range of a luminescence detection system.

12. The use according to any one of the preceding claims, wherein the compound according to formula (I) is used in a liquid or solid light-scattering matrix as a scattering spectral fluorescence standard and as a fluorescence standard for determining the fluorescence quantum yield of scattering and fluorescence systems and/or for testing the measurement methods and equipment used for this purpose.

13. The use according to any one of the preceding claims, wherein the compound according to formula (I) is used as a surface marking or encapsulated doping of particles with particle diameters in the range of nanometers to micrometers.

14. The use according to any one of the preceding claims, wherein the compound according to formula (I) is used as a molecular or particulate fluorescence marker.

15. The use according to any one of the preceding claims, wherein the compound according to formula (I) is used as a fluorescence intensity standard that can be read out integrally.

16. A kit for traceable calibration of a photoluminescence measurement system, in particular a fluorescence measurement system, comprising a fluorescence standard according to formula (I) according to any one of Claims 1 to 6 as well as a spectrally corrected fluorescence spectrum of the fluorescence standard in table form, in computer-readable form and/or information on a web page, where the corrected fluorescence spectrum can be retrieved.

## Revendications

1. Utilisation d'un composé répondant à la formule générale (I) en tant qu'étalon de fluourescence PIR 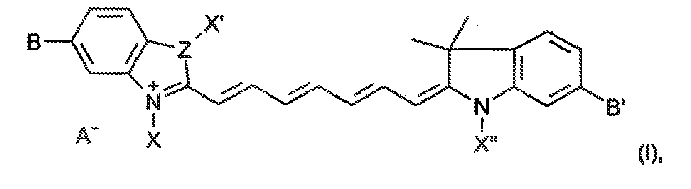 B et B' signifiant, indépendamment l'un de l'autre, un radical hydrogène, méthyle, éthyle, phényle, naphtyle, benzoxazole, benzimidazole, benzthiazole ou indole, et B et B' étant choisis de façon à être différents l'un de l'autre ; X' et X" signifiant, indépendamment l'un de l'autre, un radical méthyle, éthyle ou phényle ; Z signifiant un atome d'azote ou de carbone et A⁻ un anion, un ou plusieurs radicaux hydrogène de la formule I ainsi que des radicaux cités pouvant être substitués.

2. Utilisation selon la revendication 1, X et X" dans la formule (I) étant choisis de façon à être différents l'un de l'autre.

3. Utilisation selon la revendication 1 ou 2, B ou B' dans la formule (I) signifiant un radical hydrogène ou benzoxazole, B étant plus particulièrement un radical benzoxazole et B' un radical hydrogène.

4. Utilisation selon l'une des revendications précédentes, X, X' et x" dans la formule (I) siginifiant chacun un radical éthyle ou phényle, X étant plus particulièrement un radical éthyle et X' et X" un radical phényle.

5. Utilisation selon l'une des revendications précédentes, Z dans la formule (I) signifiant un atome d'azote.

6. Utilisation selon l'une des revendications précédentes, le composé utilisé étant celui selon la formule (II) : 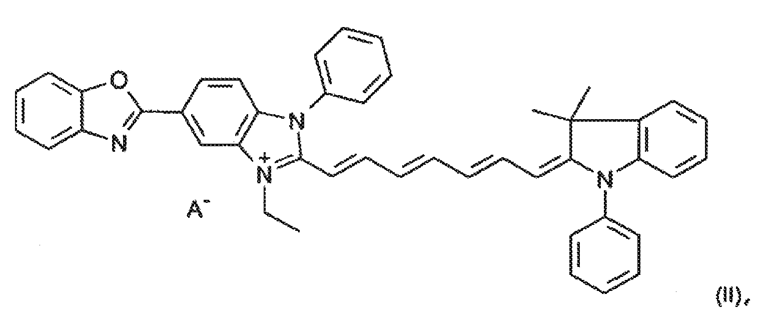 l'anion A étant notamment ClO₄⁻.

7. Utilisation selon l'une des revendications précédentes, le composé selon la formule (I) étant mis en oeuvre en tant qu'étalon de spectre de fluorescence servant à établir une fonction de correction de l'émission et/ou de l'excitation contenant des composantes spectrales qui sont spécifiques à un système de mesure de luminenscence devant être calibré.

8. Utilisation selon la revendication 7, le composé selon la formule (I) étant mis en oeuvre en tant qu'étalon de spectre de fluorescence, en association avec d'autres étalons de spectre de fluorescence dont les spectres de fluorescence sont choisis de façon à ce que leur ensemble couvre un domaine spectral défini préalablement.

9. Utilisation selon l'une des revendications précédentes, le composé selon la formule (I) étant mis en oeuvre en tant qu'étalon de rendement quantique de fluorescence.

10. Utilisation selon l'une des revendications précédentes, le composé selon la formule (I) étant mis en oeuvre en tant qu'étalon destiné à vérifier la performance spectrale de l'appareil, la stabilité à long terme des caractéristisques spectrales de l'appareil et la sensibilité spectrale d'un système de mesure de photoluminescence.

11. Utilisation selon l'une des revendications précédentes, le composé selon la formule (I) étant mis en oeuvre en tant qu'étalon destiné à déterminer et vérifier le domaine de linéarité d'un système de détection de luminescence.

12. Utilisation selon l'une des revendications précédentes, le composé selon la formule (I) étant mis en oeuvre, au sein d'une matrice liquide ou solide provoquant une diffusion de la lumière, en tant qu'étalon de fluorescence destiné à déterminer le rendement quantique de fluorescence de systèmes provoquant une diffusion et une fluorescence et/ou à verifier les procédés et appareillages de mesure mis en oeuvre à cet effet.

13. Utilisation selon l'une des revendications précédentes, le composé selon la formule (I) étant mis en oeuvre en tant que marqueur de surface ou agant dopant encapsulé pour particules ayant un diamètre de particule compris entre le domaine nanométrique et le domaine micrométrique.

14. Utilisation selon l'une des revendications précédentes, le composé selon la formule (I) etant mis en oeuvre en tant que marqueur particulaire de fluorescence.

15. Utilisation selon l'une des revendications précédentes, le composé selon la formule (I) étant mis en oeuvre en tant qu'étalon d'intensité de fluorescence dont la valeur peut être identifiée par calcul intégral.

16. Kit destiné à calibrer, selon les exigences de traçabilité, un système de mesure de photoluminescence, s'agissant notamment d'un système de mesure de fluorescence, comprenant un étalon de fluorescence répondant à la formule (I) selon l'une des revendications 1 à 6 ainsi qu'un spectre de fluorescence dudit étalon de fluorescence, ledit spectre ayant subi une correction spectrale et se présentant sous une forme tabulaire, sous une forme lisible par ordinateur, et/ou une indication d'un site internet sur lequel ledit spectre de fluorescence peut être consulté.
